# EUROPEAN PATENT APPLICATION

(11) **EP 4 845 023 A1**
(43) Date of publication of application: **25.11.2026**
(21) Application number: 26179919.1
(22) Date of filing: 20.05.2026
(51) Int. Cl.: H02S 20/23

(54) **SOLAR PANEL MOUNTING SYSTEM**

(30) Priority: 21.05.2025 US 202563809663 P
(71) Applicant: Tesla, Inc., Austin, TX 78725 (US)
(72) Inventor: LEMUS, Dylon, Austin, TX 78725 (US); PASTERNAK, Jacob, Austin, TX 78725 (US); PUKINSKIS, Brencis, Austin, TX 78725 (US); SEERY, Martin, Austin, TX 78725 (US)
(74) Representative: Liesegang, Eva

(57) **Abstract**

A mounting system for a solar panel includes a base configured to be coupled to a support structure, a solar panel interface configured to be coupled to the solar panel, and a bracket including a first portion coupled to the base and a second portion coupled to the solar panel interface. A gap is defined between the first portion and the second portion of the bracket. The mounting system further includes a fastener configured to extend at least partially across the gap to facilitate at least partially securing a roofing component within the gap.

## Description

### CROSS-REFERENCE TO RELATED PATENT APPLICATION

This application claims the benefit of and priority to U.S. Provisional Application No. 63/809,663, filed May 21, 2025, the entire disclosure of which is incorporated by reference herein.

### TECHNICAL FIELD

The present disclosure relates generally to solar panels. More specifically, the present disclosure relates to a system for mounting a solar panel to a structure.

### BACKGROUND

Solar panels are often installed on roofs due to the exposure of such structures to sunlight. Some roofs utilize roof tiles to protect the roof and seal the roof against water ingress. It is desirable to provide a system that is capable of mounting a solar panel to such a roof without compromising the protection provided by the roof tiles.

### SUMMARY

At least one embodiment relates to a mounting system for a solar panel. The mounting system includes a base configured to be coupled to a support structure, a solar panel interface configured to be coupled to the solar panel, and a bracket including a first portion coupled to the base and a second portion coupled to the solar panel interface. A gap is defined between the first portion and the second portion of the bracket. The mounting system further includes a fastener configured to extend at least partially across the gap to facilitate at least partially securing a roofing component within the gap.

In some embodiments, the bracket includes a threaded section coupled to the second portion of the bracket, and the fastener is in configured to engage the threaded section and extend toward the first portion of the bracket.

In some embodiments, the first portion of the bracket defines a receiving aperture. The fastener is repositionable between (a) a first position in which the fastener engages the threaded section and extends partway across the gap and (b) a second position in which the fastener engages the threaded section and extends into the receiving aperture.

In some embodiments, the fastener is configured to extend through a component aperture of the roofing component to couple the roofing component to the bracket at least when the fastener is in the second position.

In some embodiments, the fastener is a first fastener, and the mounting system further includes a spanner bar, a second fastener, and a third fastener. The spanner bar is positioned between the solar panel interface and the second portion of the bracket, the spanner bar defining a first slot and a second slot each extending at least partially along a length of the spanner bar. The second fastener extends within the first slot and engages the spanner bar to couple the solar panel interface to the spanner bar. The third fastener extends within the second slot and engages the spanner bar to couple the second portion of the bracket to the spanner bar.

In some embodiments, the fastener is a first fastener, and the base includes a first flange configured to be coupled to the support structure, a second flange extending upward from the first flange and defining a first lateral slot and a second lateral slot, and a second fastener. The first lateral slot and the second lateral slot extend laterally. The first lateral slot is laterally offset from the second lateral slot. The second fastener extends through the first lateral slot to couple the first portion of the bracket to the second flange of the base.

At least one embodiment relates to a mounting system for a solar panel. The mounting system includes a base configured to be coupled to a support structure, a solar panel interface configured to be coupled to the solar panel, a bracket having a first end portion coupled to the base and a second end portion positioned above the first end portion, a spanner bar defining a slot extending at least partially along a length of the spanner bar, and a fastener extending within the slot and engaging the spanner bar to couple the solar panel interface or the second end portion of the bracket to the spanner bar.

In some embodiments, the fastener is a T-bolt including a threaded portion and a pair of wings extending outward from the threaded portion, and the wings engage the spanner bar to couple the solar panel interface or the second end portion of the bracket to the spanner bar.

In some embodiments, the mounting system further includes a washer defining a washer aperture that receives the threaded portion of the T-bolt. The washer has an alignment surface that is configured to engage the T-bolt to limit rotation of the washer relative to the T-bolt. The washer includes a visual indicator indicating an orientation of the T-bolt.

In some embodiments, the T-bolt has a flat surface extending along the threaded portion of the T-bolt, and the alignment surface is configured to engage the flat surface to limit rotation of the washer relative to the T-bolt.

In some embodiments, the visual indicator is a lever arm, and the washer is configured to permit a user to rotate the T-bolt within the slot of the spanner bar by pressing against the lever arm.

In some embodiments, the spanner bar includes a pair of flanges at least partially defining the slot, and the wings of the T-bolt are configured to engage the flanges of the spanner bar to resist removal of the T-bolt from the slot.

In some embodiments, the slot is a first slot, the spanner bar defines a second slot extending at least partially along the length of the spanner bar, and the fastener is a first fastener extending within the first slot and engaging the spanner bar to couple the second end portion of the bracket to the spanner bar. The mounting system further includes a second fastener extending within the second slot and engaging the spanner bar to couple the solar panel interface to the spanner bar.

In some embodiments, the first slot is positioned along a lateral side of the spanner bar, and the second slot is positioned along a top side of the spanner bar.

In some embodiments, the spanner bar is a first spanner bar and the slot is a first slot, and the first spanner bar defines a first coupling passage extending at least partially along the length of the first spanner bar. The mounting system further includes a second spanner bar defining a second coupling passage and a second slot extending at least partially along a length of the second spanner bar and a connector configured to extend within the first coupling passage and the second coupling passage to couple the first spanner bar to the second spanner bar such that the first slot aligns with the second slot.

In some embodiments, the connector includes a protrusion that is configured to engage the first spanner bar to limit insertion of the connector into the first coupling passage.

In some embodiments, the protrusion is configured to engage the second spanner bar to limit insertion of the connector into the second coupling passage.

At least one embodiment relates to a mounting system for a solar panel. The mounting system includes a base, a bracket configured to be coupled to a solar panel, and a fastener. The base includes a first flange configured to be coupled to a support structure and a second flange extending upward from the first flange and defining a first lateral slot and a second lateral slot. The first lateral slot and the second lateral slot extend laterally. The first lateral slot is laterally offset from the second lateral slot. The fastener extends through the first lateral slot to couple the bracket to the second flange of the base.

In some embodiments, the fastener is a first fastener and the bracket defines a vertical slot extending vertically. The first fastener extends through the first lateral slot and the vertical slot to couple the bracket to the second flange of the base. The first flange defines a first fastener aperture and a second fastener aperture each configured to receive a second fastener to couple the base to the support structure. The first fastener aperture is laterally offset from the second fastener aperture.

In some embodiments, the mounting system further includes a pad extending along a bottom side of the first flange and fixedly coupled to the base. The pad includes an ethylene propylene diene terpolymer (EPDM) foam.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

### BRIEF DESCRIPTION OF THE FIGURES

FIG. 1 is a perspective view of a building including a solar panel mounting system securing a series of solar panels to a roof, according to an embodiment.
FIG. 2 is a perspective view of the mounting system and the roof of FIG. 1.
FIG. 3 is a perspective view of the mounting system of FIG. 1 including a base, a hook, a spanner bar, and a leveling foot.
FIG. 4 is a perspective view of the base and the hook of FIG. 3.
FIG. 5 is a section view of the hook, the spanner bar, and the leveling foot of FIG. 3.
FIG. 6 is an exploded perspective view of the base and the hook of FIG. 3.
FIG. 7 is a perspective view of the hook of FIG. 3 engaging a flashing panel, according to an embodiment.
FIG. 8 is a front view of the spanner bar of FIG. 3.
FIG. 9 is a perspective view of the spanner bar of FIG. 3 with a splice plate inserted into the spanner bar, according to an embodiment.
FIG. 10 is a perspective view of two of the spanner bars of FIG. 3 coupled using the splice plate of FIG. 9.
FIG. 11 is a front end view of a splice plate of FIG. 9.
FIG. 12 is a perspective view of the spanner bar of FIG. 3 assembled with an end cap, according to an embodiment.
FIG. 13 is an exploded view of the spanner bar and the end cap of FIG. 12.
FIG. 14 is a perspective view of the end cap of FIG. 12.
FIG. 15 is an exploded view of a fastener assembly of the mounting system of FIG. 1.
FIG. 16 is a perspective view of a wing nut of the fastener assembly of FIG. 15.
FIG. 17 is a section view of an acorn nut of the fastener assembly of FIG. 15.
FIG. 18 is a top section view of a bolt of the fastener assembly of FIG. 15 inserted into the spanner bar of FIG. 3 in an insertion orientation.
FIG. 19 is a top section view of a bolt of the fastener assembly of FIG. 15 inserted into the spanner bar of FIG. 3 in a retention orientation.
FIG. 20 is a side view of the leveling foot of FIG. 3.
FIG. 21 is a side view of the spanner bar of FIG. 3, the leveling foot of FIG. 3, and a solar panel of FIG. 1.
FIG. 22 is a side view of a leveling foot, according to another embodiment.
FIG. 23 is a side view of the spanner bar of FIG. 3, the leveling foot of FIG. 22, and a solar panel of FIG. 1.
FIG. 24 is a front view of a spanner bar and a splice plate, according to another embodiment.
FIG. 25 is a front view of a spanner bar and a splice plate, according to another embodiment.
FIG. 26 is a front view of a spanner bar and a splice plate, according to another embodiment.
FIG. 27 is a front view of a spanner bar and a splice plate, according to another embodiment.
FIG. 28 is a perspective view of the spanner bar of FIG. 25 and a leveling foot, according to another embodiment.
FIG. 29 is a perspective view of an S-tile being marked for use with the mounting system of FIG. 1, according to an embodiment.
FIG. 30 is a perspective view showing a portion of the S-tile of FIG. 29 to be removed.
FIG. 31 is a perspective view of the S-tile of FIG. 29 in an unchipped configuration.
FIG. 32 is a perspective view of the S-tile of FIG. 29 in a chipped configuration.
FIG. 33 is a perspective view of a W-tile for use with the mounting system of FIG. 1 in an unchipped configuration, according to an embodiment.
FIG. 34 is a perspective view of the W-tile of FIG. 33 in a chipped configuration.
FIG. 35 is a perspective view of a flat tile for use with the mounting system of FIG. 1 in an unchipped configuration, according to an embodiment.
FIG. 36 is a perspective view of the flat tile of FIG. 35 in a chipped configuration.
FIG. 37 is a perspective view of the S-tile of FIG. 29 installed in an unchipped configuration, according to an embodiment.
FIG. 38 is a perspective view of the S-tile of FIG. 29 installed in a chipped configuration, according to an embodiment.

### DETAILED DESCRIPTION

Before turning to the figures, which illustrate certain exemplary embodiments in detail, it should be understood that the present disclosure is not limited to the details or methodology set forth in the description or illustrated in the figures. It should also be understood that the terminology used herein is for the purpose of description only and should not be regarded as limiting.

Referring generally to the figures, a mounting system facilitates mounting one or more solar panels to a roof that utilizes roof tiles, particularly S-tile, W-tile, and flat tile. The mounting system includes a series of bases that couple to decking of the roof beneath the roof tiles. A hook extends upward from each base, around a metal flashing plate. A fastener coupled to the hook pierces the metal flashing plate to secure the metal flashing plate in place. A spanner bar is coupled to an upper end portion of each hook by inserting a first T-bolt through the hook and into a first slot of the spanner bar. A series of leveling feet couple one or more solar panels to the spanner bar. A second T-bolt extends through each leveling foot and into a second slot of the spanner bar to couple the leveling foot to the spanner bar. The mounting system provides various features that facilitate positional adjustment of these components relative to one another, increasing the speed at which the mounting system can be installed. Additionally, the arrangement of the mounting system may be shorter or lower-profile than other mounting systems, permitting the solar panels to be mounted closer to the surface of the roof.

### Building Overview

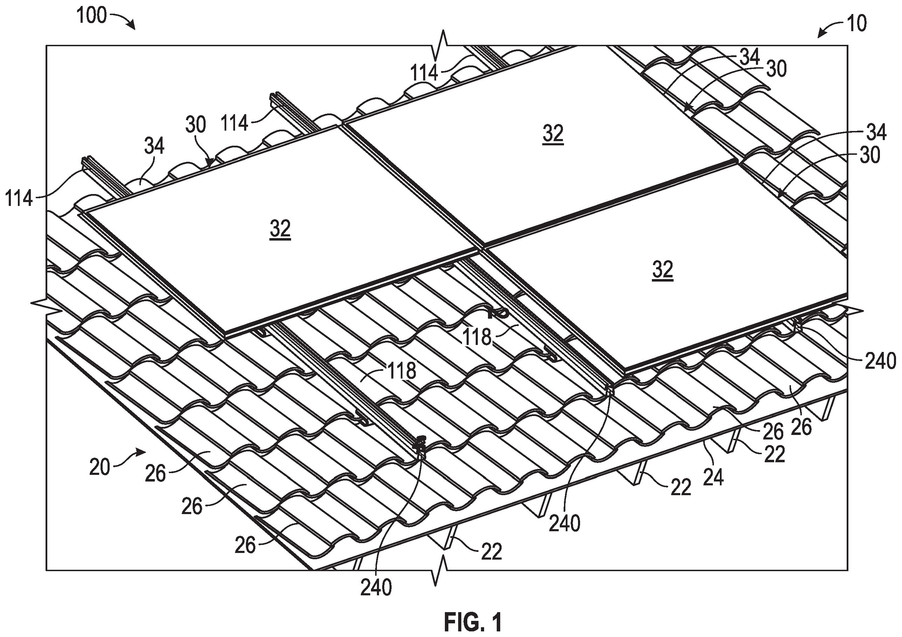

Referring to FIG. 1, a solar-equipped structure or building system is shown as building 10, according to an embodiment. The building 10 may be a residential building (e.g., a single-family home, an apartment building, etc.), a commercial building (e.g., a shop, a storage unit, etc.), a garage, a shed, a barn, a gazebo, or another type of covered structure. The building 10 may cover or contain people and/or items (e.g., furniture, appliances, vehicles, machinery, etc.).

The building 10 includes a roof assembly, cover, or awning, shown as roof 20. The roof 20 includes a series of support beams or joists, shown as rafters 22, supporting the other components of the roof 20. The rafters 22 extend longitudinally and substantially parallel to one another. The rafters 22 may be offset from one another at regular intervals (e.g., 12 inches, 24 inches, etc.). The rafters 22 support a series of panels (e.g., plywood panels), shown as decking 24. The decking 24 extends along the top surfaces of the rafters 22 and may be fixedly coupled to the rafters 22. The decking 24 may be covered with a barrier or layer of underlayment that seals the roof 20 and prevents ingress of water through the roof 20. The rafters 22 and the decking 24 may be angled relative to a horizontal plane (e.g., inclined) to facilitate shedding water from the roof 20. Together, the rafters 22 and the decking 24 may form a support structure that supports other components of the building 10.

The roof 20 further includes a series of panels or covers, shown as roof tiles 26. As shown, the roof tiles 26 are formed as S-shaped roof tiles (e.g., S-tiles) or pantiles. In other embodiments, the roof tiles 26 are W-tiles, flat tiles, or other shapes of roof tile. The roof tiles 26 may be formed from ceramic (e.g., clay), slate, concrete, or other materials. The roof tiles 26 are fixedly coupled to the rafters 22 and/or the decking 24 (e.g., using screws or nails). The roof tiles 26 may be arranged to overlap one another, such that the roof tiles 26 interlock with one another to form a continuous roof surface.

The building 10 further includes a series of photovoltaic panels or photosensitive panels, shown as solar panels 30. The solar panels 30 each have a photovoltaic surface 32 including a series of photovoltaic cells. The photovoltaic surface 32 may face upward when the solar panels 30 are mounted to the roof 20, such that the photovoltaic surface 32 is exposed to sunlight. The photovoltaic surface 32 may generate electrical energy in response to exposure to the sunlight, such that the solar panels 30 acts as a source of electrical energy. The solar panels 30 may provide the generated electrical energy to power an electrical load (e.g., an appliance, a battery charger, a power grid, a power storage system, etc.). Accordingly, the solar panels 30 may power electrical loads associated with (e.g., positioned in or around) the building 10. Each solar panel 30 further includes a series of rails, shown as solar panel frame 34, that extends around the photovoltaic surface 32. The solar panel frame 34 may provide mounting points that support the photovoltaic surface 32 and facilitate coupling the solar panels 30 to the roof 20. The building 10 may include more or fewer solar panels 30 based on the size of the building 10 and the energy demands of electrical loads.

The building 10 further includes a mounting frame, rail system, or solar panel mounting system (e.g., a mounting system for the solar panels 30), shown as mounting system 100. The mounting system 100 may be installed on the roof 20 by one or more installation personnel (e.g., contractors, construction workers, etc.), referred to herein as an "installer." The mounting system 100 supports the solar panels 30 and fixedly couples the solar panels 30 to the roof 20. The mounting system 100 may be adjustable or scalable (e.g., by adding or removing components) to accommodate different numbers or sizes of the solar panels 30. By way of example, components may be added to mount additional solar panels 30, or components may be removed if a smaller number of solar panels 30 are desired. By way of another example, components may be spaced farther from one another to accommodate larger solar panels 30, or components may be spaced closer together to accommodate smaller solar panels 30.

### Solar Panel Mounting System

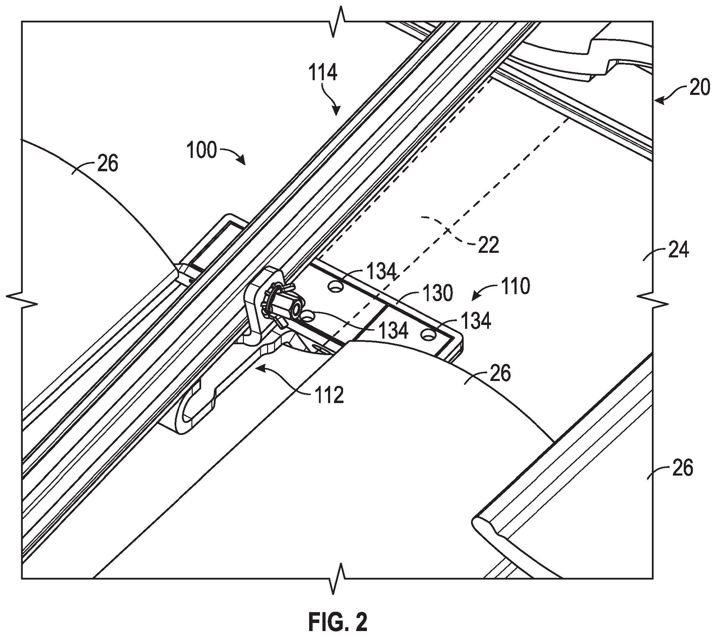

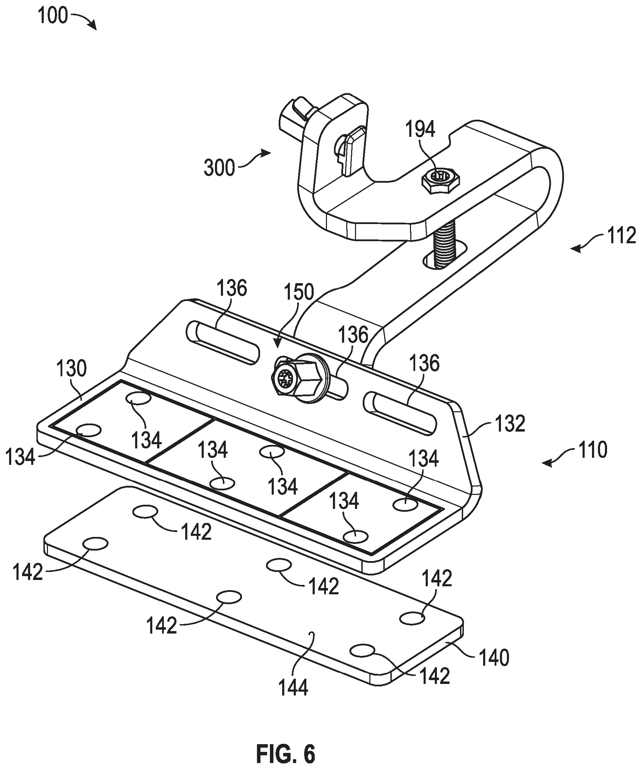

As shown in FIGS. 2-6, the mounting system 100 is shown according to an embodiment. The mounting system 100 includes a footing or base assembly, shown as base 110, that is fixedly coupled to the roof 20. Specifically, the base 110 may be fastened to the rafters 22 and/or the decking 24. The mounting system 100 includes a bracket, extension, arm, or standoff, shown as hook 112, that is coupled to the base 110 and extends upward from the base 110. A proximal or lower end of the hook 112 is fastened to the base 110. The mounting system 100 includes a rail, shown as spanner bar 114, that is fastened to a distal or upper end of the hook 112. The spanner bar 114 extends along the roof 20 (e.g., parallel to a plane of the roof 20). The mounting system 100 may include multiple bases 110 and hooks 112 that support each spanner bar 114.

The mounting system 100 includes one or more mounting interfaces, solar panel interfaces, or mounting brackets, shown as leveling feet 116, coupled to the spanner bar 114. The leveling feet 116 each engage with the solar panel frame 34 to couple the solar panels 30 to the leveling feet 116. Accordingly, the leveling feet 116 couple the solar panels 30 to the spanner bar 114. The leveling feet 116 are spaced along length of the spanner bar 114. In some embodiments, the positions of the hooks 112 and the leveling feet 116 along the length of the spanner bar 114 are adjustable. This adjustability may facilitate adjusting the mounting system 100 to accommodate different positions of the base 110 and the solar panels 30 without having to modify the roof tiles 26. By adjusting the hooks 112, the spanner bars 114, and/or the leveling feet 116, the installer may place the base 110 near the deepest part of a roof tile 26 (e.g., the valley of the roof tile 26), avoiding having to reposition the roof tiles 26. Additionally, the leveling feet 116 may be adjustable to vary the height of the solar panels 30 (e.g., the distance between the solar panels 30 and the roof 20) to facilitate leveling the solar panels 30.

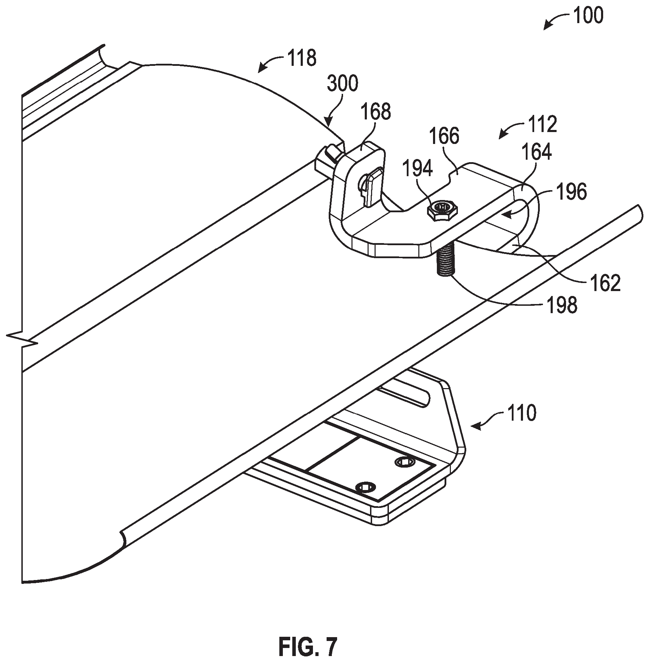

Referring to FIGS. 1 and 7, the mounting system 100 includes one or more roofing components that are coupled to the hooks 112. The roofing components may be any component of the roof 20 that can be coupled to the hook 112, such as a roof tile 26, panel, cover, or piece of flashing (e.g., a flashing panel). As shown in FIGS. 1 and 7, the roofing components are panels or covers, shown as flashing panels 118. The flashing panels 118 may have a similar shape, size, and/or visual appearance (e.g., color and texture) to the roof tiles 26. The flashing panels 118 and the roof tiles 26 may be made from different materials (e.g., the flashing panels 118 may be made from sheet metal, and the roof tiles 26 may be made from clay). When installing the mounting system 100, an installer may be required to remove one or more roof tiles 26 in order to access the decking 24 to mount the bases 110. Instead of reinstalling the roof tiles 26 after the base 110 are installed, the removed roof tiles 26 may be replaced with the flashing panels 118. The flashing panels 118 may interlock with the surrounding roof tiles 26 to seal the roof 20 and resist water ingress through the roof 20.

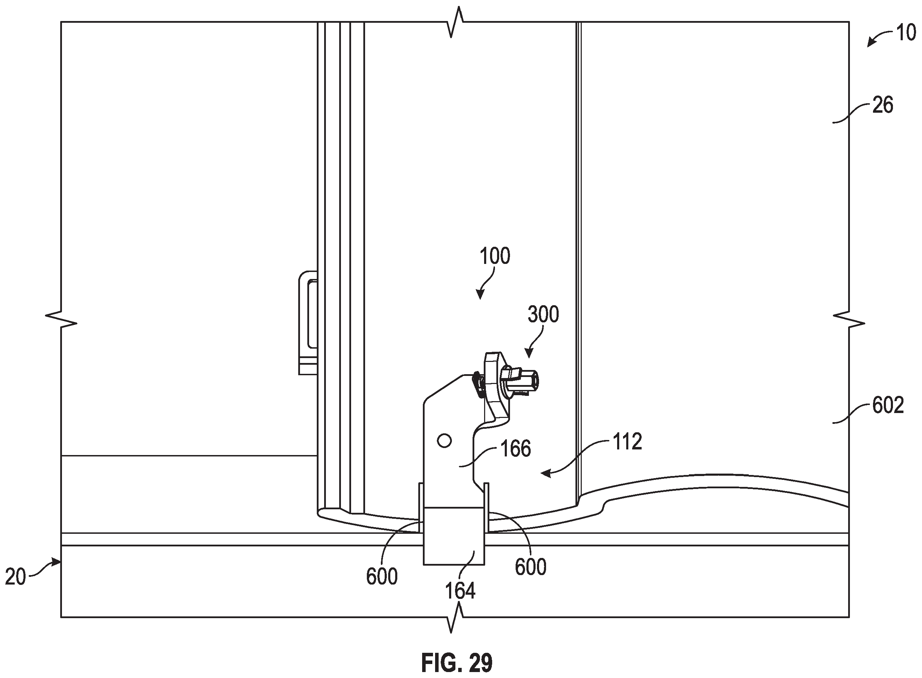

Alternatively, the roof tiles 26 may be modified to accommodate the hooks 112 and reinstalled in place of the flashing panels 118. As shown in FIG. 29, a process for retrofitting or otherwise modifying a roof tile 26 to fit with the mounting system 100 is shown according to an exemplary embodiment. This process may be performed by installation personnel when the mounting system 100 is being installed. In FIG. 29, a roof tile 26 is placed over the mounting system 100 (e.g., within a gap 196 of a hook 112) in a position that aligns or interlocks with the adjacent roof tiles 26. Without modification, a portion of the roof tile 26 may engage the hook 112 and interfere with the roof tile 26 being seated fully onto the adjacent roof tiles 26 (e.g., the roof tile 26 may be held up due to contact with the hook 112). Accordingly, a portion of the roof tile 26 is removed (e.g., through tile chipping, grinding, etc.) to prevent this interference.

In the position of FIG. 29, the roof tile 26 is marked to indicate a portion of the roof tile 26 that interferes with the hook 112. A first marking 600 is made (e.g., using chalk, using a marker, by scratching into the roof tile 26, etc.) to indicate a leftmost boundary of the interference, and a second marking 600 is made to indicate a rightmost boundary of the interference. The distance between the markings 600 may be approximately equal to the width of the hook 112.

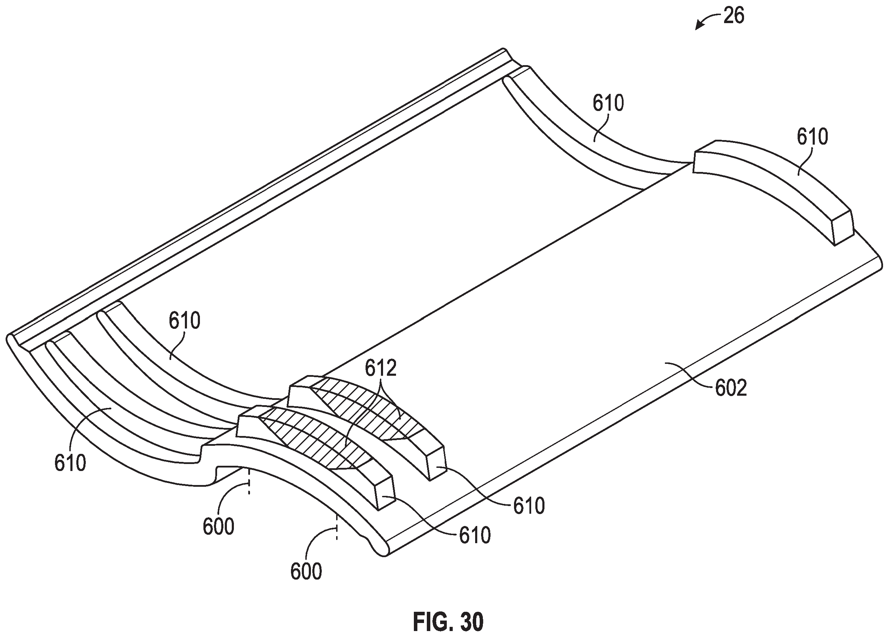

As shown in FIG. 30, the roof tile 26 includes a main body, horizontal portion, or covering portion, shown as tile body 602. In FIG. 30, the roof tile 26 is an S-tile, and the tile body 602 has an S-shape that interlocks with the adjacent roof tiles 26. The roof tile 26 further includes a series of structural supports, braces, stiffeners, protrusions, lips, mounting points, locating references, or ribs, shown as support ribs 610, that extend downward from the tile body 602. As shown, the support ribs 610 extend laterally along the underside of the tile body 602. Because the support ribs 610 extend below the tile body 602, a subset of the support ribs 610 engage and interfere with the hook 112. If the portions of these support ribs 610 causing the interference were to be removed, the roof tiles 26 would be permitted to sit flat, as desired. These portions are highlighted in FIG. 30 and shown as removed portions 612.

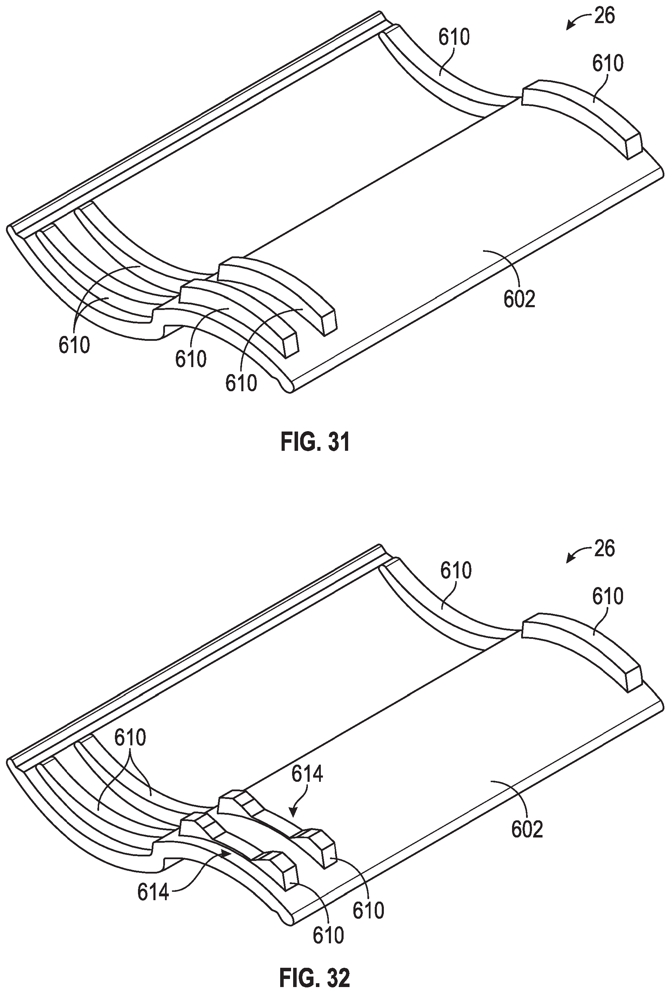

As shown in FIGS. 30-32, the removed portion 612 is removed by installation personnel (e.g., through chipping with a hammer or grinding with an abrasive wheel). The boundaries of the removed portion 612 may be identified based on the markings 600. By way of example, a worker may remove every part of an interfering support rib 610 that is positioned between the markings 600. After removal, a recess 614 is formed by the remaining portions of the support rib 610. This recess 614 may receive the hook 112, permitting the roof tile to seat fully against the other roof tiles 26.

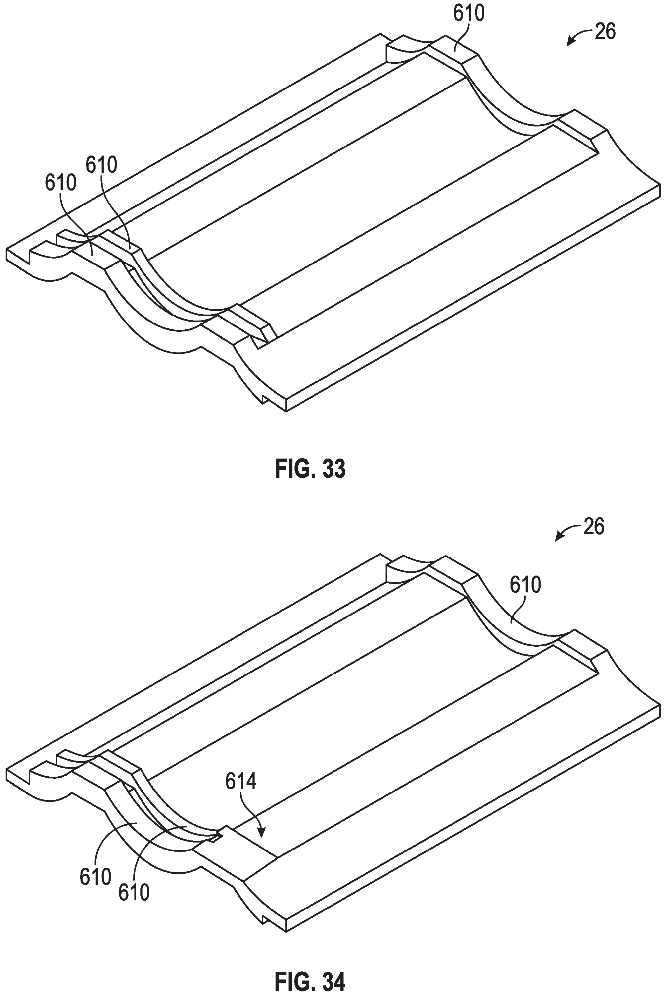

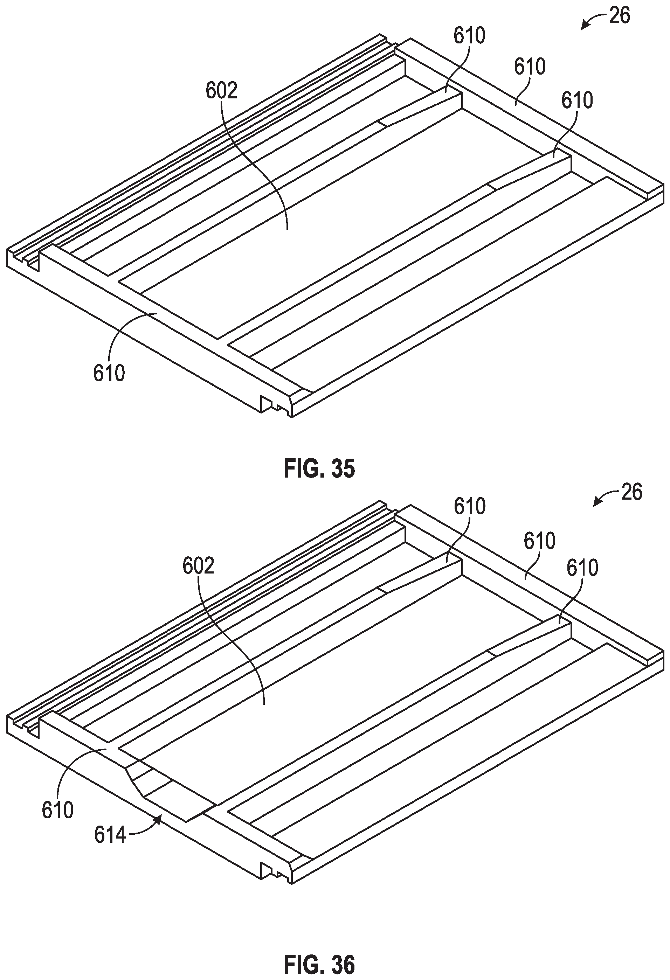

A similar process may be followed to modify other shapes and types of tile. By way of example, FIGS. 33 and 34 illustrate a tile chipping process for a W-tile having a W-shaped profile. By way of another example, FIGS. 35 and 36 illustrate the tile chipping process for a flat tile having a flat shape. The flat tile further includes structural ribs 610 that extend longitudinally along the underside of the tile body 602.

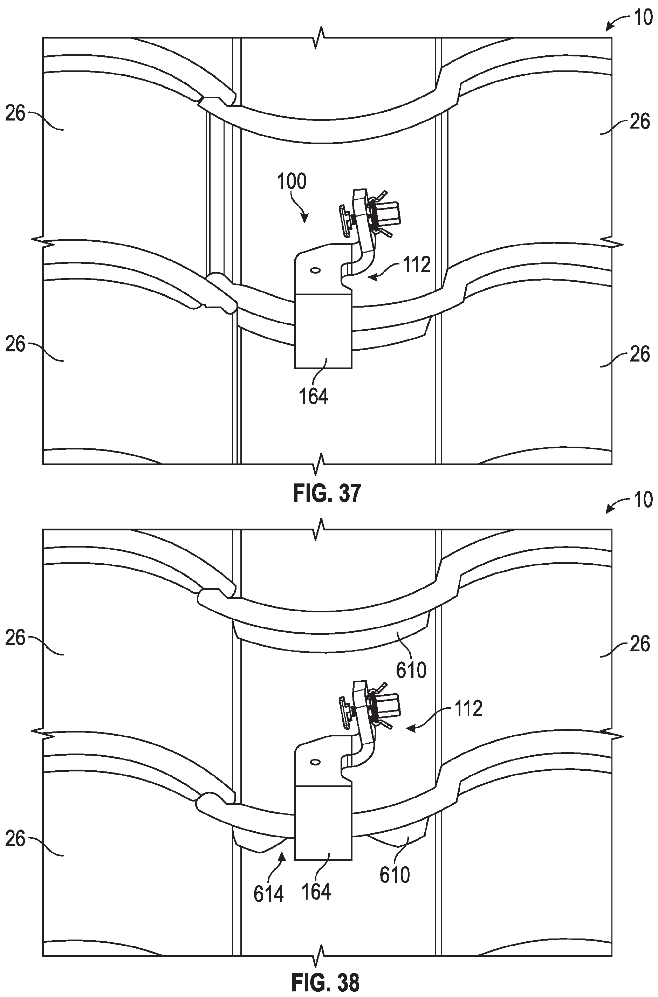

FIGS. 37 and 38 illustrate the effects of the tile chipping process for an S-tile (e.g., the roof tile of FIG. 30). In an unchipped state, shown in FIG. 37, the support ribs 610 interfere with hook 112 and prevent the roof tile 26 from seating fully with the adjacent roof tiles 26. This could lead to an improper seal and potential water ingress between the roof tiles 26. In a chipped state, shown in FIG. 38, the hook 112 fits within the recess 614, permitting the roof tiles 26 to seat fully.

Through the tile chipping process, the mounting system 100 can be made to accommodate both the flashing panels 118 and the roof tiles 26. Beneficially, if one of the roof tiles 26 were to be broken (e.g., during transport or while chipping the roof tile 26), the roof tile 26 could be replaced by a flashing panel 118. In some embodiments, the height of the gap 196 of the hook 112 is sized to accommodate the roof tiles 26 and the flashing panels 118. In some embodiments, the roof tile 26 is secured to the hook 112 in a similar fashion to the flashing panel 118 (e.g., using the flashing bolt 194). In other embodiments, the roof tile 26 is inserted into the gap 196, and the flashing bolt 194 is omitted.

### A. Base

Referring to FIGS. 2-4 and 6, the base 110 includes a lower portion or mounting portion, shown as base flange 130, and an upper portion or upright portion, shown as upright flange 132. The upright flange 132 may be fixedly coupled to the base flange 130. By way of example, the base flange 130 and the upright flange 132 may be integrally formed as a single, continuous piece of material. The base flange 130 extends along (e.g., substantially parallel to) the decking 24. The upright flange 132 extends upward at an angle from the base flange 130 and toward the hook 112.

The base flange 130 defines a series of apertures or passages, shown as fastener apertures 134, extending through the base flange 130. Each of the fastener apertures 134 is configured to receive a fastener (e.g., a wood screw) that engages the roof 20 to fixedly couple the base 110 to the roof 20. As shown, the base flange 130 defines three sets of two fastener apertures 134. Within each set, the fastener apertures 134 are longitudinally offset from one another. The sets of fastener apertures 134 are laterally offset from one another, with one set being positioned proximate a left side of the base flange 130, one set being positioned proximate a right side of the base flange 130, and one set being positioned proximate the center of the base flange 130.

When mounting the base flange 130 to the roof 20, it may be desirable for the fasteners to pass through the decking 24 and engage with one of the rafters 22, as the rafters 22 may provide a more secure connection than the decking 24 alone. An installer may select one set of fastener apertures 134 to populate with fasteners, such that two fasteners are used to couple the base flange 130 to the roof 20. By providing three sets of fastener apertures 134 at three different lateral positions, the installer may be provided with three different choices for positioning the fasteners for a given position of the base 110. For example, for a given desired position of the base 110, the base 110 may be coupled to a rafter 22 aligned with the first set of fastener apertures 134, the second set of the fastener apertures 134, or the third set of the fastener apertures 134. Accordingly, by including multiple sets of fastener apertures 134, the base 110 may be placed to avoid obstacles (e.g., a chimney or vent protruding through the roof 20) while still engaging the fasteners with a rafter 22.

The upright flange 132 defines a series of apertures or passages, shown as lateral slots 136, extending through the upright flange 132. Each of the lateral slots 136 is configured to receive a fastener (e.g., the carriage bolt 154) to couple the hook 112 to the upright flange 132. As shown, the upright flange 132 defines three of the lateral slots 136. The lateral slots 136 each are elongated (e.g., extend) laterally and are laterally offset from one another. To achieve a desired position of the hook 112, the installer may (a) select the lateral slot 136 closest to the desired position and (b) slide the fastener to the desired position along the selected lateral slot 136. By providing three lateral slots 136 as opposed to a single continuous slot, the lateral slots 136 may permit adjustability while maintaining the structural integrity of the upright flange 132 between the lateral slots 136.

The base 110 further includes a foam pad, isolator, or seal, shown as pad 140, extending along a bottom side of the base flange 130, between the base flange 130 and the decking 24. The pad 140 defines a series of apertures, shown as fastener apertures 142, that extend through the pad 140. The fastener apertures 142 align with the fastener apertures 134, such that fasteners extending through the fastener apertures 134 extend through the corresponding fastener apertures 142 to reach the decking 24. The pad 140 may form a seal between the base flange 130 and the decking 24, preventing water ingress between the base flange 130 and the decking 24 and around the fasteners.

In some embodiments, a top surface of the pad 140 is covered with a glue or adhesive, shown as adhesive 144. The adhesive 144 fixedly couples the pad 140 to a bottom surface of the base flange 130. Beneficially, the adhesive 144 ensures that the pad 140 is preassembled with the base flange 130, ensuring that both components may be transported together in a desired configuration. Other mounting systems may utilize a liquid sealant that is applied to the bottom of a mounting bracket before securing the mounting bracket to decking of a roof in order to prevent water ingress. The pad 140 does not require this sealant, which saves the installer time, eliminates the potential for the sealant to become stuck to unintended surfaces, and avoids the installer having to carry a separate container of sealant.

In some embodiments, the pad 140 is made from (e.g., includes, is made entirely from, etc.) a compliant material, such as rubber, cork, or plastic. In some such embodiments, the pad 140 is made from a closed-cell foam (e.g., a synthetic rubber foam). In some such embodiments, the pad 140 is made from an ethylene propylene diene terpolymer (EPDM) foam. In some embodiments, the pad 140 is made from an open-cell foam that becomes a closed-cell foam when compressed. By way of example, the pad 140 may include a layer of butyl applied to an open-cell foam such that the butyl flows into the open cells of the foam when compressed, changing the foam to a closed-cell structure. The material of the pad 140 may not be adhesive (e.g. sticky or tacky), such that the material may not adhere to other objects without the application of a separate adhesive. Beneficially, by using such a material and a separate layer of the adhesive 144 to couple the pad 140 to the base flange 130, the base 110 may be carried in a container (e.g., a work bag) without becoming stuck to the walls of the container or other components within the container. Other mounting systems may utilize an adhesive foam pad (e.g., a butyl pad), requiring a separate barrier (e.g., a paper covering) to prevent the pad from inadvertently sticking to other objects. Such a barrier may require removing and disposing of the barrier prior to installation, adding steps to the installation process.

A coupler, shown as fastener assembly 150, couples the base 110 to the hook 112. The fastener assembly 150 includes a female fastener or nut, shown as acorn nut 152, and a male fastener or bolt, shown as carriage bolt 154. The carriage bolt 154 may be inserted through the hook 112 and one of the lateral slots 136 and engaged with the acorn nut 152 to couple the hook 112 to the base 110. When the installer is satisfied by the position of the hook 112 relative to the base 110, the installer may tighten the acorn nut 152 to fix the hook 112 relative to the base 110. In some embodiments, a neck of the carriage bolt 154 received within the hook 112 is flattened (e.g., square), such that engagement between the neck and the hook 112 limits rotation of the carriage bolt 154 relative to the hook 112. By using a carriage bolt with this square neck, the fastener assembly 150 may be installed using a single tool (e.g., a socket wrench) instead of requiring a second wrench to prevent rotation of the carriage bolt 154.

### B. Hook

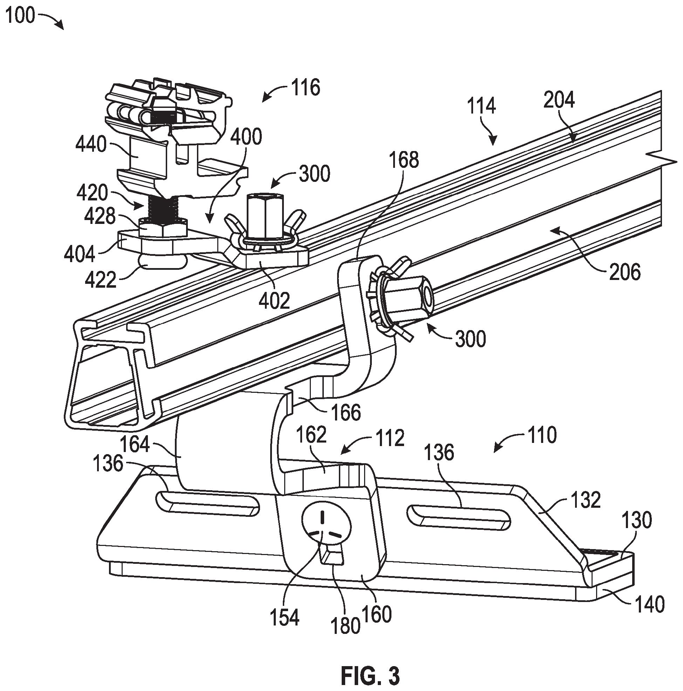

Referring to FIGS. 3-5, the hook 112 is formed as a single, continuous piece including multiple portions connected in series with one another. Specifically, the hook 112 includes a first end portion, lower portion, or proximal portion, shown as lower mounting tab 160, a first middle portion, shown as lower body 162, a second middle portion, shown as bent portion 164, a third middle portion, shown as upper body 166, and a second end portion, upper portion or distal portion, shown as upper mounting tab 168. The lower mounting tab 160 is coupled to the base 110. The lower mounting tab 160 is flat and extends upward. The lower body 162 is fixedly coupled to the lower mounting tab 160. The lower body 162 is flat and extends in a first longitudinal direction from the lower mounting tab 160. The bent portion 164 is fixedly coupled to the lower body 162. The bent portion 164 is formed in a c-shape and extends upward from the lower body 162. The upper body 166 is fixedly coupled to the bent portion 164. The upper body 166 is flat and extends in a second longitudinal direction from the bent portion 164. The upper mounting tab 168 is fixedly coupled to the upper body 166. The upper mounting tab 168 is flat and extends upward from the upper body 166.

The lower mounting tab 160 defines an aperture or passage, shown as vertical slot 180, that extends through the lower mounting tab 160. The lower mounting tab 160 is oriented such that the vertical slot 180 is elongated (e.g., extends) vertically. The carriage bolt 154 extends through the vertical slot 180, such that the vertical slot 180 receives the neck of the carriage bolt 154. Accordingly, when the acorn nut 152 is loosened, the carriage bolt 154 may be moved along the length of the vertical slot 180 to adjust the vertical position of the hook 112.

The upper mounting tab 168 defines an aperture or passage, shown as fastener aperture 182, that extends through the upper mounting tab 168. The upper mounting tab 168 is oriented such that the fastener aperture 182 extends laterally. The fastener aperture 182 is sized to receive a fastener (e.g., fastener assembly 300) to couple the hook 112 to the spanner bar 114.

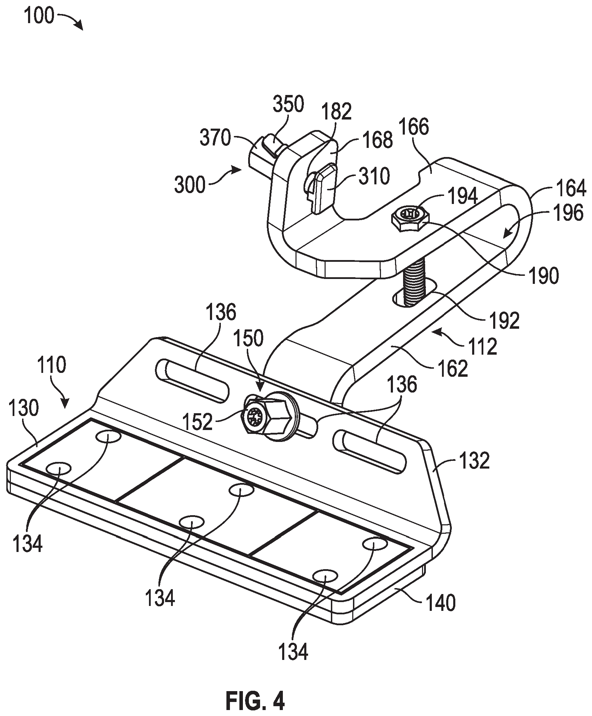

Referring to FIG. 4, the upper body 166 defines a threaded section, threaded aperture, or passage, shown as threaded passage 190, that extends vertically through the upper body 166. The threaded passage 190 may be threaded (e.g., form a female thread). In other embodiments, the threaded passage 190 is defined by another component of the hook 112 that is coupled to the upper body 166. By way of example, the upper body 166 may define a smooth passage that is not threaded, and the hook 112 may instead include a nut that defines the threaded passage 190 aligned with the smooth passage. The nut may be fixedly coupled to the upper body 166, or the nut may brace against the upper body 166 (e.g., a lower surface of the upper body 166) and be prevented from rotating by an external force (e.g., by a wrench engaging the nut).

The lower body 162 defines an elongated aperture or passage, shown as fastener slot 192, that extends vertically through the lower body 162. As shown, the fastener slot 192 is elongated along the length of the lower body 162 (e.g., longitudinally). The fastener slot 192 aligns or overlaps with the threaded passage 190.

A fastener or bolt, shown as flashing bolt 194, extends through the threaded passage 190. The flashing bolt 194 is threaded (e.g., with a male thread), such that the flashing bolt 194 is in threaded engagement with the threaded passage 190. The flashing bolt 194 may be repositionable by rotating the flashing bolt 194. By rotating the flashing bolt 194 in a first direction (e.g., clockwise) relative to the upper body 166, an installer may advance the flashing bolt 194 through the threaded passage 190 to lower the flashing bolt 194. Similarly, by rotating the flashing bolt 194 in a second direction (e.g., counterclockwise) relative to the upper body 166, the installer may retract the flashing bolt 194 through the threaded passage 190 to raise the flashing bolt 194. A top end of the flashing bolt 194 may include an interface (e.g., an external hexagonal screw head, an internal screw driving interface, etc.) to facilitate turning the flashing bolt 194 with a tool (e.g., a wrench, a screwdriver, etc.).

As shown, the fastener slot 192 overlaps or aligns with the threaded passage 190. Accordingly, the flashing bolt 194 may be lowered through the threaded passage 190 until a lower or distal end of the flashing bolt 194 is received within the fastener slot 192 (e.g., as shown in FIG. 4). The hook 112 defines a recess, shown as gap 196, that extends between the lower body 162, the bent portion 164, and the upper body 166. When the fastener slot 192 receives the flashing bolt 194, the flashing bolt 194 crosses the gap 196 to pass from the threaded passage 190 to the fastener slot 192.

The fastener slot 192 may be sized to provide a clearance fit for the lower end portion of the flashing bolt 194, such that the flashing bolt 194 may pass freely into the fastener slot 192 when the flashing bolt 194 is lowered. As shown, the fastener slot 192 is elongated in the longitudinal direction (e.g., is narrower in the lateral direction than the longitudinal direction). This longitudinal elongation may accommodate a tolerance in the bent portion 164 while still ensuring that the that the fastener slot 192 is capable of receiving the flashing bolt 194. Throughout manufacturing, transportation, and installation of the mounting system 100, the hook 112 may be exposed to forces that bend the bent portion 164. By way of example, if a weight were placed atop the hook 112, the upper body 166 may be forced toward the lower body 162, causing bending deformation of the bent portion 164. This bending deformation may cause the upper body 166 to rotate toward the lower body 162, changing the trajectory of the flashing bolt 194. However, because the fastener slot 192 is elongated longitudinally, the fastener slot 192 would still be able to receive the flashing bolt 194 through a different longitudinal portion of the fastener slot 192. Accordingly, the elongation of the fastener slot 192 permits operation of the flashing bolt 194 even if the bent portion 164 becomes deformed.

Referring to FIGS. 1 and 7, the flashing bolt 194 may be used to secure a flashing panel 118 to the hook 112. When installing the mounting system 100 on the roof 20, an installer may select a desired position for a flashing panel 118 that matches the pattern of the surrounding roof tiles 26. By way of example, the flashing panel 118 may be positioned to interlock with the surrounding roof tiles 26. Once in the desired position, the flashing panel 118 may extend within the gap 196, crossing between the threaded passage 190 and the fastener slot 192.

With the flashing panel 118 in the desired position, the installer may turn the flashing bolt 194 (e.g., with an impact driver or wrench) relative to the threaded passage 190. This tightens the flashing bolt 194, lowering the flashing bolt 194 until the flashing bolt 194 contacts an upper surface of the flashing panel 118 and the lower body 162 contacts a lower surface of the flashing panel 118. The installer may continue turning the flashing bolt 194, and the threaded engagement between the flashing bolt 194 and the threaded passage 190 forces the flashing bolt 194 to penetrate through the flashing panel 118 and enter into the fastener slot 192. This forms a component aperture, shown as flashing aperture 198, around the flashing bolt 194. The flashing aperture 198 extends vertically through the flashing panel 118 and receives the flashing bolt 194. Accordingly, the flashing bolt 194 fixes the flashing panel 118 in the desired position.

Other mounting systems may utilize a fastener that simply clamps or pins a flashing panel in place. However, throughout the life of the building 10, the hook 112 may experience forces that bend the upper body 166 upward. By way of example, wind contacting the solar panels 30 may pull the solar panels 30 upward, bending the upper body 166 away from the lower body 162. If the flashing bolt 194 simply pinned the flashing panel 118 against the lower body 162, such a bending would loosen connection between the flashing bolt 194 and the flashing panel 118, potentially permitting the flashing panel 118 to come free. However, because the flashing bolt 194 passes through the flashing aperture 198, such a bending of the hook 112 would not affect the security of the connection between the hook 112 and the flashing panel 118.

### C. Spanner Bar

Referring to FIGS. 3, 5, and 8, the spanner bar 114 is shown according to an embodiment. The spanner bar 114 may be manufactured as an extrusion (e.g., an extruded tube, etc.). The spanner bar 114 may have a cross-sectional shape that is constant along the length of the spanner bar 114 (e.g., such that any two cross sections of the spanner bar 114 at different longitudinal positions along the length of the spanner bar 114 are substantially identical).

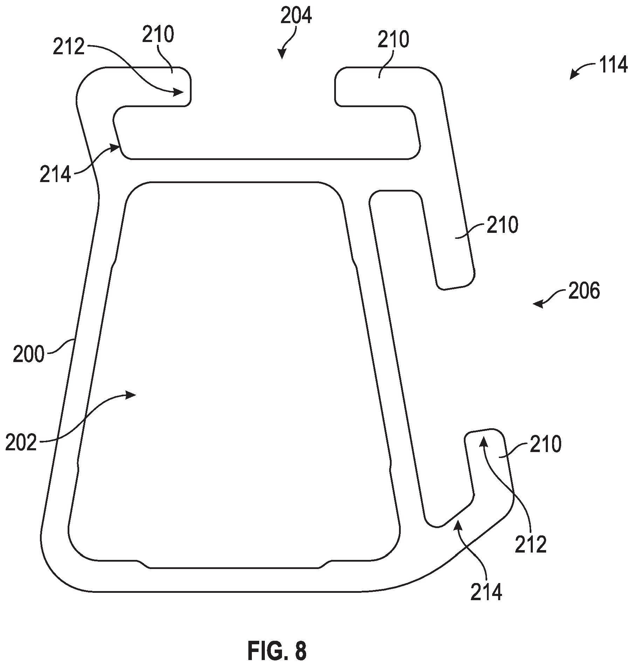

Referring to FIG. 8, the spanner bar 114 includes a tubular portion, central portion, main portion, or base portion, shown as body 200. The body 200 has a top side, a bottom, side, and a pair of laterally-facing sides each extending between the top side and the bottom side. An aperture or coupling passage, shown as central passage 202, extends longitudinally through the entirety of the body 200 (e.g., from a first longitudinal end of the spanner bar 114 to the second longitudinal end of the spanner bar 114). The central passage 202 is surrounded by the top side, the bottom sides, and the laterally-facing sides of the body 200. In other embodiments, the central passage 202 extends only partially along the length of the spanner bar 114.

The spanner bar 114 defines a first slot, groove, or recess, shown as top slot 204, positioned along the top side of the body 200. The top slot 204 extends longitudinally through the entirety of the spanner bar 114 (e.g., from a first longitudinal end of the spanner bar 114 to the second longitudinal end of the spanner bar 114). The top slot 204 faces upward and away from the body 200. In other embodiments, the top slot 204 extends only partially along the length of the spanner bar 114.

The spanner bar 114 defines a second slot, groove, or recess, shown as side slot 206, positioned along one of the laterally-facing sides of the body 200. The side slot 206 extends longitudinally through the entirety of the spanner bar 114 (e.g., from a first longitudinal end of the spanner bar 114 to the second longitudinal end of the spanner bar 114). The side slot 206 faces laterally outward and away from the body 200. In other embodiments, the side slot 206 extends only partially along the length of the spanner bar 114. Advantageously, the asymmetrical arrangement of the central passage 202, the top slot 204, and the side slot 206 may minimize the amount of material required to manufacture the spanner bar 114 while maximizing the strength of the spanner bar 114.

The spanner bar 114 includes two sets of protrusions, shown as flanges 210, that define the top slot 204 and the side slot 206. Each set includes two of the flanges 210 that are offset outward from the body 200 and that extend toward one another. The flanges 210 are fixedly coupled to the body 200. By way of example, the body 200 and the flanges 210 may be integrally formed as a single, continuous piece of material.

Each of the top slot 204 and the side slot 206 includes an outer portion or section, shown as narrow portion 212, and an inner portion or section, shown as wide portion 214. The wide portion 214 is positioned between the narrow portion 212 and the body 200. The narrow portion 212 is defined between the flanges 210. The wide portion 214 is defined between the flanges 210 and the body 200.

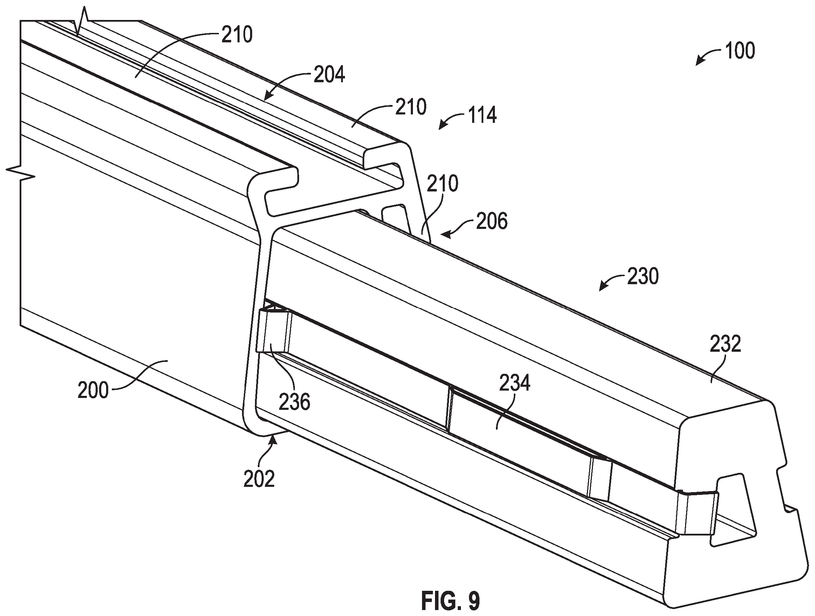

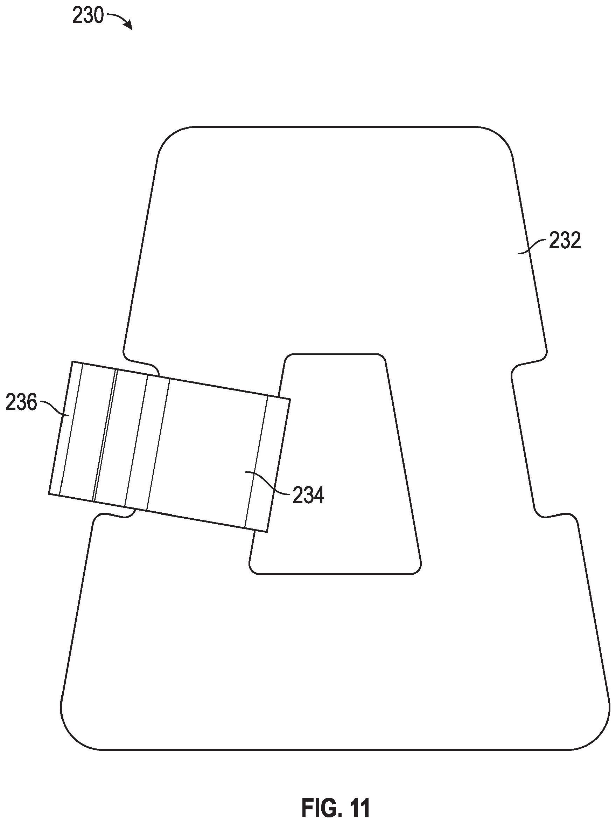

Referring to FIGS. 9-11, in some situations, it may be advantageous to vary the usable length of a spanner bar arrangement including the spanner bar 114. By way of example, a spanner bar 114 having a given length may be suitable for supporting a given number of solar panels 30 or a given size of solar panel 30. If a particular installation of the mounting system 100 requires multiple solar panels 30 or larger solar panels 30, it may be advantageous to increase the usable length of the spanner bar arrangement to support the additional solar panels 30 or the larger solar panels 30. To accomplish this, the mounting system 100 may include at least one spanner bar connector or coupler, shown splice plate 230. The splice plate 230 may couple two of the spanner bars 114 to one another in a series or end-to-end arrangement, effectively increasing the usable length of the spanner bar arrangement. The splice plate 230 may couple two identical spanner bars 114 to one another, permitting the usable length of the spanner bar arrangement to be increased without having to manufacture spanner bars 114 of different lengths. In other embodiments where the length of a single spanner bar 114 is sufficient to support the desired solar panels 30, the splice plate 230 may be omitted.

The splice plate 230 includes a main portion, base, body, or inserted portion, shown as body 232. The body 232 may have a similar cross-sectional shape and size to the central passage 202. Accordingly, the body 232 may be inserted into the central passages 202 of the spanner bar 114 being coupled to one another, such that a first end of the body 232 is received within a first spanner bar 114, and a second end of the body 232 is received within a second spanner bar 114. The shape and size of the body 232 may limit lateral, vertical, and rotational movement of the splice plate 230 relative to the spanner bars 114 (e.g., permitting only relative longitudinal movement of the spanner bars 114 and the splice plate 230). Accordingly, the body 232 may limit movement of the spanner bar 114 such that the central passages 202 are aligned with one another, the top slots 204 are aligned with one another, and the side slot 206 are aligned with one another.

The splice plate 230 includes an attached portion or retaining clip, shown as clip 234, that is fixedly coupled to the body 232. The clip 234 may wrap around the ends of the body 232 to couple the body 232 to the clip 234. The clip 234 includes a protrusion, shown as stop 236, that extends laterally outward, beyond the body 232. The stop 236 may be approximately longitudinally centered relative to the body 232.

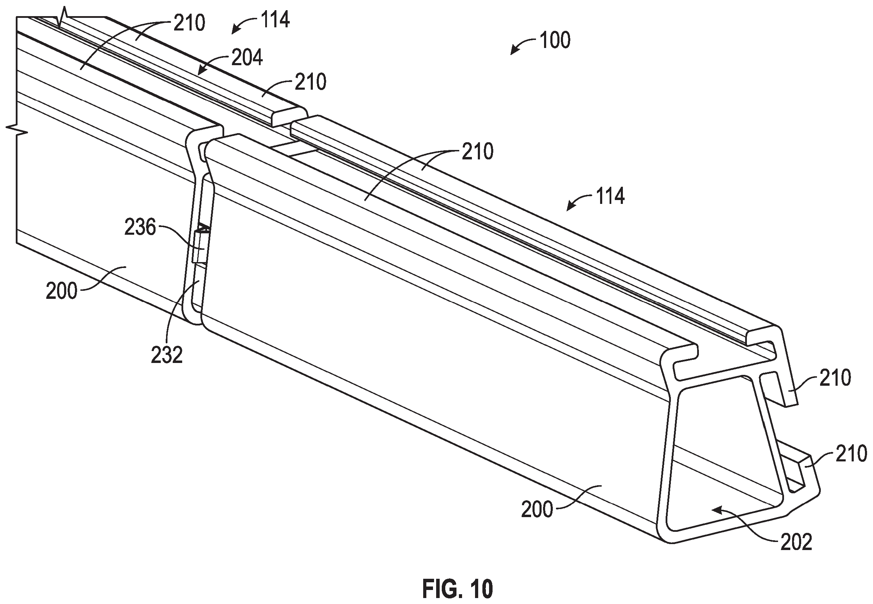

Referring to FIG. 10, two spanner bars 114 are shown coupled using the splice plate 230. In this arrangement, the ends of the body 232 are inserted into the central passages 202 of the spanner bars 114. The stop 236 engages a face of the body 200 of the first spanner bar 114 to limit insertion of the body 232 into the central passage 202 of the first spanner bar 114. The stop 236 also engages a face of the body 200 of the second spanner bar 114 to limit insertion of the body 232 into the central passage 202 of the second spanner bar 114. Accordingly, the stop 236 may facilitate symmetrical insertion of the splice plate 230 into both of the spanner bars 114, maximizing the strength of the connection between the spanner bars 114 and the splice plate 230. Because the splice plate 230 is simply inserted into the central passages 202, the splice plate 230 may be assembled without the need for tools.

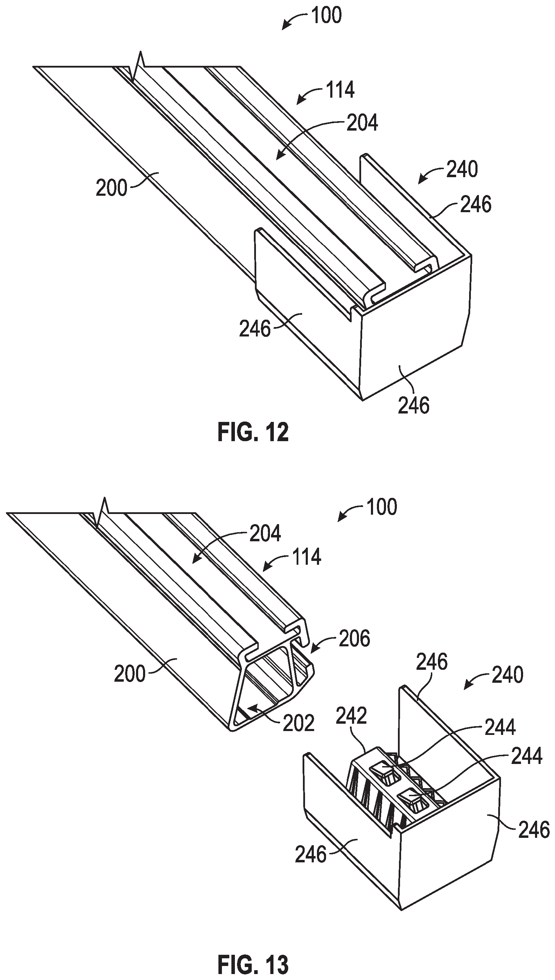

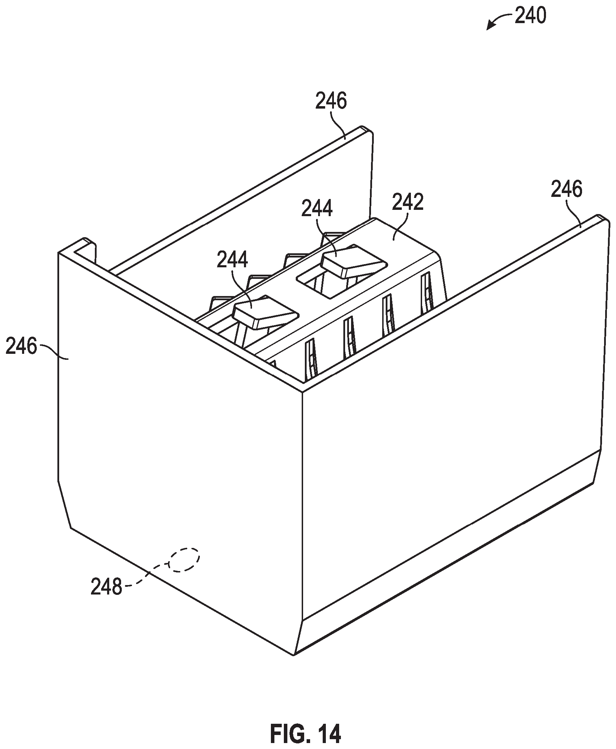

Referring to FIGS. 12-14, the mounting system 100 may include one or more cosmetic end caps, spanner caps, or plugs, shown as end caps 240. Each end cap 240 includes an inserted portion, shown as plug 242, that is sized and shaped to be inserted into the central passage 202 of a spanner bar 114. To couple the end cap 240 to the spanner bar 114, the plug 242 may be pressed longitudinally into the central passage 202. The plug 242 includes a series of retainers (e.g., tabs), shown as fins 244, that extend outward from the plug 242. When the plug 242 is inserted into the central passage 202, the fins 244 engage an inner surface of the body 200 to resist (e.g., limit or prevent) removal of the end caps 240 from the spanner bar 114.

The end cap 240 includes a series of cosmetic panels, shown as cover panels 246, that are fixedly coupled to the plug 242. When the plug 242 is inserted into the central passage 202, the cover panels 246 extend around the body 200, obscuring the spanner bar 114 from sight. One or more of the cover panels 246 define an aperture, shown as weep hole 248. The weep hole 248 may permit water (e.g., rain, condensation, etc.) to exit the central passage 202, preventing the water from becoming trapped within the spanner bar 114 by the end cap 240.

As shown in FIG. 1, when assembling the mounting system 100, the end caps 240 may prevent the spanner bars 114 from being visible to an observer on the ground. By way of example, an observer may be able to see the ends of the spanner bar 114 that face downward. The spanner bar 114 may be made from a visually distinct (e.g., light, reflective, etc.) material that an observer would identify and could consider not to be aesthetically pleasing. An end cap 240 may be inserted into each of the ends of the spanner bars 114 that can be viewed by the observer. The end caps 240 may be less visually distinct (e.g., darker, more matte, etc.) than the spanner bar 114, such that attaching the end caps 240 may reduce the visibility of the spanner bar 114 and improve the overall aesthetic of the mounting system 100.

### D. Fastener Assembly

Referring to FIGS. 3, 5, and 15, the mounting system 100 includes a coupler or fastener assembly, shown as fastener assembly 300. A first fastener assembly 300 couples the spanner bar 114 to the hook 112. A second fastener assembly 300 couples the leveling foot 116 to the spanner bar 114.

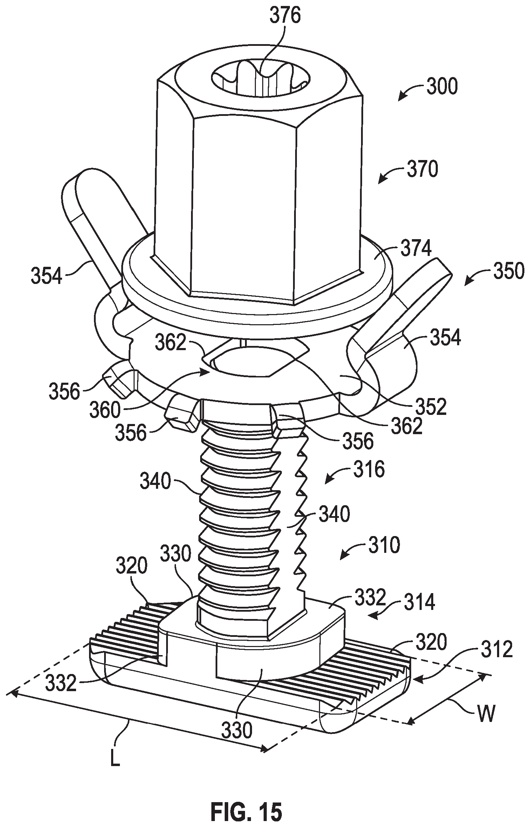

As shown in FIG. 15, the fastener assembly 300 includes a blind fastener or T-bolt, shown as bolt 310. The bolt 310 includes a coupler portion, flanged portion, or base portion, shown as head 312, a middle portion, shoulder, or shank, shown as neck 314, and an upper portion or thread, shown as threaded portion 316. The neck 314 extends upward from the head 312, and the threaded portion 316 extends upward from the neck 314. The head 312, the neck 314, and the threaded portion 316 are fixedly coupled to one another. By way of example, the head 312, the neck 314, and the threaded portion 316 may be integrally formed as a single, continuous piece.

The head 312 includes a pair of protrusions, shown as wings 320, extending laterally away from one another. A top surface of each wing 320 is textured (e.g., grooved, knurled, etc.). The head 312 has a width W measured longitudinally and a length L measured laterally. The length L is greater than the width W.

The neck 314 has a pair of recessed portions or fillets, shown as rounded corners 330, and a pair of protrusions or recesses, shown as corners 332. The rounded corners 330 and the corners 332 are positioned along a perimeter of the neck 314. The rounded corners 330 and the corners 332 are arranged in an alternating pattern (e.g., the rounded corners 330 are positioned between the corners 332).

The threaded portion 316 includes a male thread that extends vertically along the threaded portion 316. The threaded portion 316 further includes a pair of flat portions, flat surfaces, flat cutouts, clocking features, or stops, shown as flat sides 340. The flat sides 340 extend vertically along the threaded portion 316 and each face laterally outward from the threaded portion 316. The flat sides 340 may be formed by cutting away material from the threaded portion 316 to form flat faces.

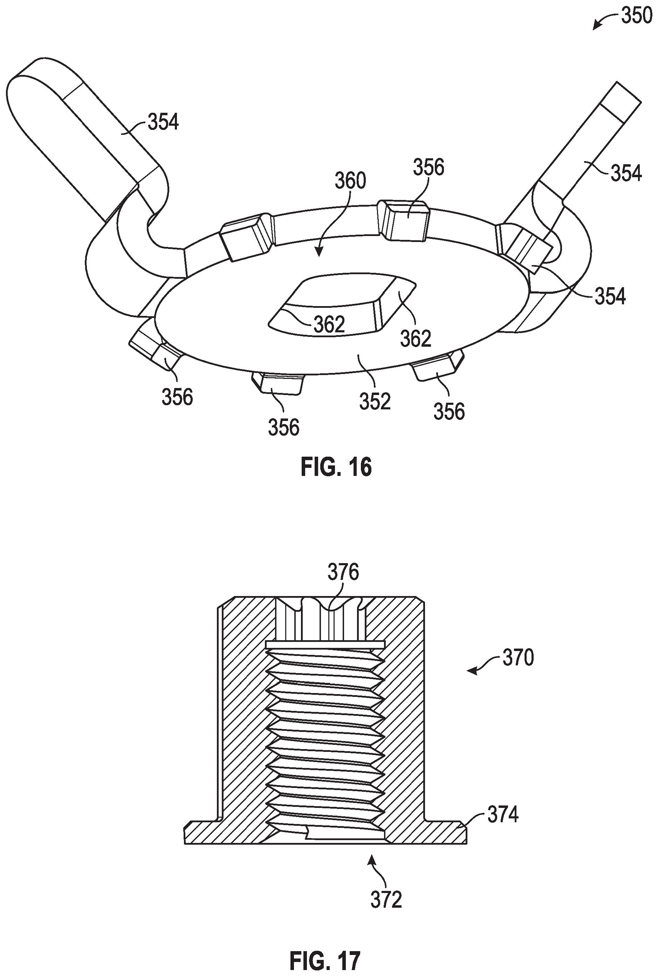

As shown in FIGS. 15 and 16, the fastener assembly 300 includes a spacer or winged washer, shown as washer 350, that is configured to receive the threaded portion 316 of the bolt 310. The washer 350 may be used to control rotation of the bolt 310. The washer 350 includes a flat portion or base, shown as body 352. A pair of levers or visual indicators, shown as wings 354, extend outward and upward from the body 352. The wings 354 are fixedly coupled to the body 352, such that a user may apply a torque onto the washer 350 through the wings 354. As shown in FIG. 15, the wings 354 are visible such that the wings 354 provide a visual indication of the current orientation of the washer 350. In other embodiments, the wings 354 are replaced with a different type of visual indicator, such as a painted section, that visually indicates the current orientation of the washer 350.

The body 352 further includes a series of protrusions, shown as teeth 356, positioned along a perimeter of the body 352, such that the body 352 acts as a toothed lock washer. The teeth 356 may engage the hook 112 or the leveling foot 116, increasing a bonding strength between the acorn nut 370 and the hook 112 or the leveling foot 116 to hold the mounting system 100 in a desired position.

The body 352 defines a central aperture, washer aperture, passage, or through hole, shown as washer aperture 360, that extends vertically through the body 352. The washer aperture 360 is sized to receive the threaded portion 316. The washer aperture 360 includes a pair of alignment surfaces, flat portions, stops, or clocking features, shown as flats 362, that face inward toward one another. With the threaded portion 316 inserted into the washer aperture 360, each of the flats 362 faces one of the flat sides 340.

As shown in FIGS. 15 and 17, the fastener assembly 300 includes a fastener, shown as acorn nut 370. The acorn nut 370 defines a threaded aperture or passage, shown as threaded passage 372, that extends vertically through the acorn nut 370. The threaded passage 372 is configured to be in threaded engagement with the threaded portion 316 of the bolt 310 to couple the bolt 310 to the acorn nut 370. The acorn nut 370 includes a flat portion or washer, shown as flange 374, that faces toward the washer 350. When the fastener assembly 300 is assembled, the body 352 is positioned between the acorn nut 370 and the head 312 of the bolt 310, and the flange 374 faces toward the body 352. An exterior surface of the acorn nut 370 may be hexagonal to facilitate driving the acorn nut 370 with a wrench. The acorn nut 370 further includes a recess, driving interface, or torque contour (e.g., a Torx interface), shown as wrench interface 376, positioned at an end of the threaded passage 372. The wrench interface 376 is configured to receive a wrench (e.g., a Torx wrench) to facilitate driving the acorn nut 370. In some embodiments, the outer surface of the of the acorn nut 370 is sized as a 0.5" hex drive, and the wrench interface 376 is sized as a T40 Torx drive.

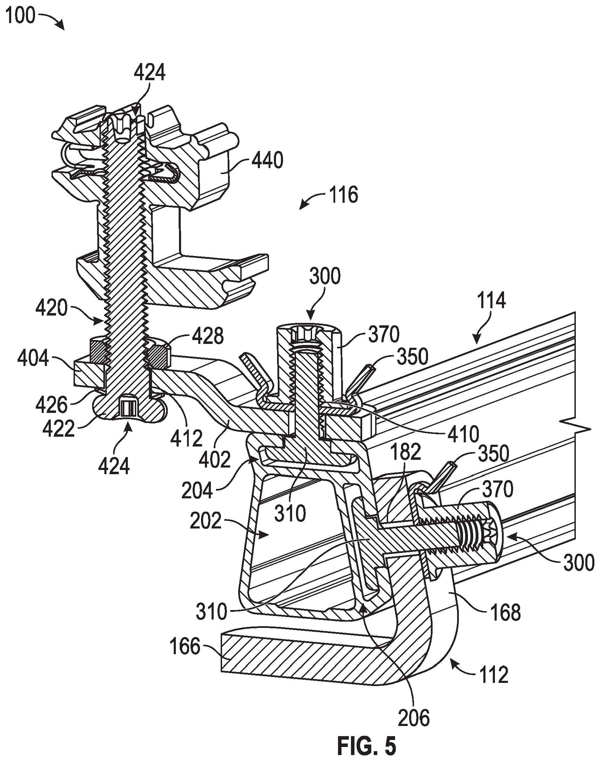

Referring to FIGS. 5, 8, and 15, the fastener assembly 300 couples the upper mounting tab 168 of the hook 112 to the spanner bar 114. To assemble the hook 112 with the spanner bar 114, an installer may insert the bolt 310 of the fastener assembly 300 into the side slot 206 of the spanner bar 114. The bolt 310 may initially be arranged in a first orientation (e.g., an insertion orientation) such that the wings 320 align with the side slot 206. The width W of the head 312 may be less than a width of the narrow portion 212 of the side slot 206 measured between the flanges 210. Accordingly, the head 312 may be freely inserted between the flanges 210 at any point along the length of the spanner bar 114 without requiring the bolt 310 to be inserted at an end of the spanner bar 114. This sizing may facilitate placing the hook 112 at any position along the spanner bar 114 regardless of whether another portion of the side slot 206 is blocked.

Once the bolt 310 is fully inserted into the side slot 206, the head 312 is positioned within the wide portion 214, and the neck 314 is positioned within the narrow portion 212. The installer may rotate the bolt 310 clockwise approximately 90 degrees to a second orientation (e.g., a retention orientation) in which the wings 320 extend substantially perpendicular to the side slot 206. The length L of the head 312 is greater than the width of the narrow portion 212 of the side slot 206. In the retention orientation, the wings 320 each extend beneath one of the flanges 210 of the spanner bar 114, such that the textured upper surfaces of the wings 320 engage the flanges 210 and prevent the bolt 310 from being pulled out of the side slot 206.

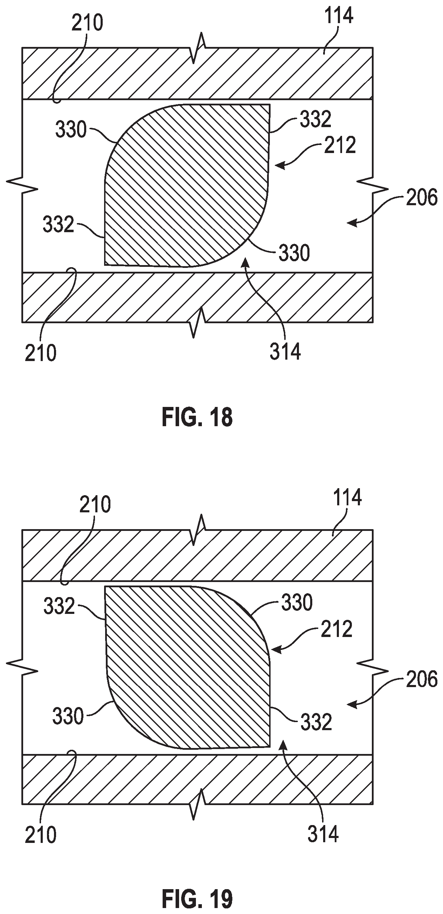

Referring to FIG. 18 and 19, the shape and size of the neck 314 may control rotation of the bolt 310 relative to the spanner bar 114. FIG. 18 illustrates the orientation of the neck 314 in the insertion orientation, and FIG. 19 illustrates the orientation of the neck 314 in the retention orientation. A distance between the rounded corners 330 is less than the distance between the flanges 210, and a distance between the corners 332 is greater than a distance between the flanges. Accordingly, the rounded corners 330 are permitted to rotate past the flanges 210 without engaging the flanges 210, but engagement between the corners 332 and the flanges 210 limits rotation of the bolt 310. Accordingly, the rounded corners 330 permit the bolt 310 to rotate from the insertion orientation to the retention orientation, but the corners 332 prevent further clockwise rotation of the bolt 310 beyond the retention orientation.

Referring again to FIGS. 5, 8, and 15, the installer may insert the threaded portion 316 of the bolt 310 through the fastener aperture 182 of the hook 112. The installer may then insert the threaded portion 316 through the washer aperture 360 of the washer 350. When inserting the threaded portion 316, the installer may ensure that the flat sides 340 align with the flats 362. Unless the washer 350 is aligned in this way, the flats 362 may prevent insertion of the threaded portion 316. The installer may then screw the acorn nut 370 onto the threaded portion 316, inserting the threaded portion 316 into the threaded passage 372.

Prior to tightening the acorn nut 370, it may be desirable to ensure that the bolt 310 is in the retention orientation. The retention orientation may maximize contact between the wings 320 and the flanges 210, which increases the strength of the connection provided by the fastener assembly 300. The engagement between the flats 362 of the washer 350 and the flat sides 340 of the bolt 310 may limit or prevent rotation of the washer 350 relative to the bolt 310. Accordingly, the wings 354 provide a visual indication of the current orientation of the bolt 310. Additionally, the installer may apply a torque onto the bolt 310 through the wings 354 (e.g., by pressing on or both of the wings 354 by hand) to move the bolt 310 to a desired orientation. Once the bolt 310 is in the desired position and orientation, the installer may utilize a tool (e.g., an impact wrench) to tighten the acorn nut 370. Engagement between the corners 332 and the flanges 210 may limit clockwise rotation of the bolt 310, permitting the fastener assembly 300 to be tightened using only one tool.

### E. Leveling Foot

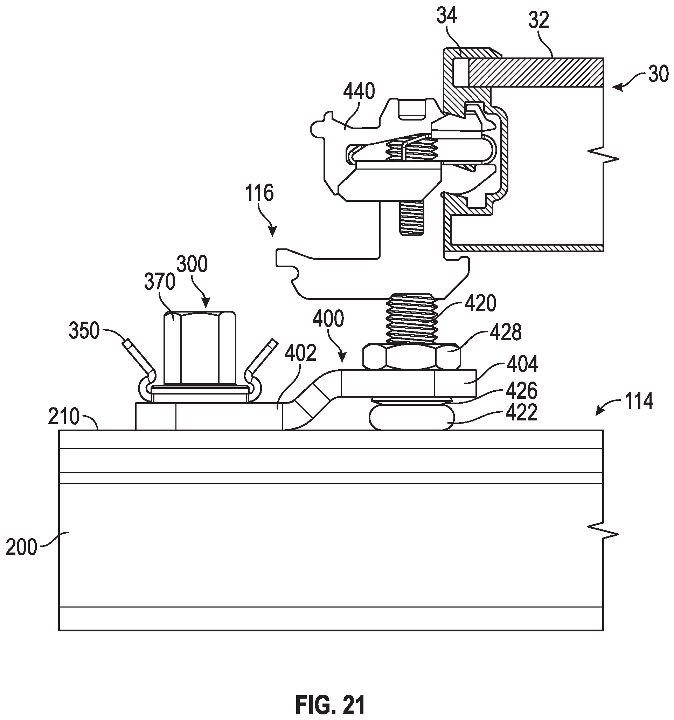

Referring to FIGS. 3, 5, 20, and 21, one of the leveling feet 116 is shown according to an embodiment. The leveling foot 116 includes a bracket, mount, or foot, shown as mounting plate 400, that is coupled to the spanner bar 114 by a second fastener assembly 300. The mounting plate 400 may provide an offset connection to facilitate adjusting the position of a solar panel 30.

The mounting plate 400 includes a first portion, proximal portion, base portion, or lower portion, shown spanner bar flange 402, and a second portion, distal portion, raised portion, or solar panel portion, shown as solar panel flange 404. The spanner bar flange 402 and the solar panel flange 404 are fixedly coupled to one another. By way of example, the spanner bar flange 402 and the solar panel flange 404 may be integrally formed as a single, continuous piece. The spanner bar flange 402 is offset below the solar panel flange 404. This offset may provide clearance for a portion of the leveling foot 116 (e.g., the head 422 of the stud 420), permitting the leveling foot 116 to be rotated 360 degrees about the fastener assembly 300 without interference from the spanner bar 114.

The spanner bar flange 402 defines a first aperture or passage, shown as fastener aperture 410, that is sized to receive the bolt 310 of the second fastener assembly 300 to couple the mounting plate 400 to the spanner bar 114. When installed, the bolt 310 of the second fastener assembly 300 extends within the top slot 204 and through the fastener aperture 410. The washer 350 of the second fastener assembly 300 engages a top surface of the spanner bar flange 402, and the acorn nut 370 of the second fastener assembly 300 applies a clamping force that holds the spanner bar flange 402 between the spanner bar 114 and the washer 350. The process of installing the second fastener assembly 300 may be similar to the process described for installing a fastener assembly 300 to couple the hook 112 to the spanner bar 114, except the bolt 310 is received within the top slot 204 and the fastener aperture 410 instead of the side slot 206 and the fastener aperture 182.

The solar panel flange 404 defines a second aperture or passage, shown as fastener aperture 412, that extends through the solar panel flange 404. The fastener aperture 412 is offset from the fastener aperture 410 along the length of the mounting plate 400. The fastener aperture 410 and the fastener aperture 412 both extend vertically, substantially parallel to one another.

The fastener aperture 412 receives a fastener, bolt, standoff, protrusion, column, upright, or screw, shown as stud 420. The stud 420 is threaded (e.g., with a male thread) along at least a portion of the length of the stud 420. The stud 420 includes a protrusion or end portion, shown as head 422, positioned at a bottom end of the stud 420. The head 422 is sized to prevent the head 422 passing through the fastener aperture 412, such that the head 422 presses against the solar panel flange 404.

The head 422 and a top end portion of the stud 420 each define a recess, driving interface, or torque contour (e.g., a Torx interface), shown as wrench interface 424. The wrench interfaces 424 are aligned with one another along a central axis of the stud 420. The wrench interface 424 are each configured to engage with a tool (e.g., a wrench) to facilitate an installer applying a torque on the stud 420. By including a wrench interface 424 at each end of the stud 420, the tool can interface with the stud 420 from above or below the stud 420.

The leveling foot 116 further includes a spacer, biasing member, spring washer, or Belleville washer, shown as bonding washer 426, that receives the stud 420. The washer 426 is positioned between the solar panel flange 404 and the head 422. The washer 426 may be a conical or spring washer, such that the washer 426 applies an outward biasing force to force the head 422 away from the solar panel flange 404.

The leveling foot 116 further includes a fastener or stop, shown as nut 428, that is in threaded engagement with the stud 420. The nut 428 engages a top surface of the solar panel flange 404, opposite the head 422. When the nut 428 is tightened, the solar panel flange 404 may be clamped or compressed between the nut 428 and the head 422, introducing frictional forces between the stud 420 and the mounting plate 400 that resist movement of the stud 420. In some embodiments, the nut 428 is welded to the stud 420 after tightening the nut 428 to a threshold torque. The threshold torque may be set such that resultant frictional force resists low-torque, unintentional rotation of the stud 420 relative to the solar panel flange 404 but still permits high-torque, intentional rotation using a tool (e.g., a wrench engaged with the wrench interface 424). By welding the nut 428, the threshold torque may be maintained over time. Advantageously, this may permit a rigid connection between the stud 420 and the solar panel flange 404 that maintains a position of the stud 420 over time.

The leveling foot 116 further includes a rockit, coupler, or interface, shown as solar panel interface 440, that is in threaded engagement with the stud 420. A vertical position of the solar panel interface 440 may be adjusted by rotating the stud 420, causing the stud 420 to thread into or out of the solar panel interface 440. The solar panel interface 440 is configured to engage the solar panel frame 34 of a solar panel 30 to couple the solar panel 30 to the solar panel interface 440. By way of example, the solar panel interface 440 may snap, clip, or otherwise engage with a groove that extends along the length of the solar panel frame 34.

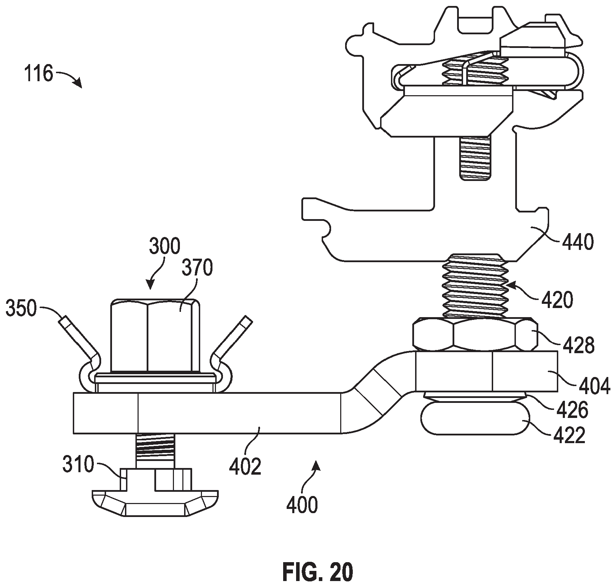

When installing the leveling foot 116, the fastener assembly 300, the mounting plate 400, the stud 420, the washer 426, the nut 428, and the solar panel interface 440 may be provided to an installer in a presassembled configuration (e.g., as shown in FIG. 20). The acorn nut 370 and the nut 428 and may be loose, permitting rotation of the bolt 310 and the stud 420. The installer may select a desired support position near the spanner bar 114 where it is desirable to support a solar panel 30. The installer may insert the bolt 310 of the fastener assembly 300 into the top slot 204 of the spanner bar 114 near this desired support position, then rotate the bolt 310 into the retention orientation using the washer 350.

The installer may then move the solar panel interface 440 into engagement with the solar panel frame 34 at the desired support position. The mounting system 100 provides several points of adjustability to accommodate a wide variety of desired support positions. The solar panel interface 440 may be repositioned longitudinally by sliding the bolt 310 along the length of the top slot 204. The solar panel interface 440 may be repositioned laterally and longitudinally by rotating the mounting plate 400 about the fastener assembly 300. The solar panel interface 440 may be repositioned vertically by rotating the stud 420 within the solar panel interface 440, causing the solar panel interface 440 to move up or down relative to the mounting plate 400. Throughout this adjustment, the stud 420 may rotate within the mounting plate 400 to ensure that the solar panel interface 440 faces toward the solar panel frame 34.

Once the solar panel interface 440 is engaged with the solar panel frame 34 at the desired support position, the installer may tighten the leveling foot 116 to fix the leveling foot 116 in place. The installer may tighten the acorn nut 370 to fix the mounting plate 400 relative to the spanner bar 114. At this point, the solar panel interface 440 may fixedly couple the solar panel 30 to the spanner bar 114.

Beneficially, the mounting system 100 may provide a continuous electrical connection between the solar panels 30, facilitating multiple solar panels 30 having a common ground connection. The leveling foot 116 includes a series of components that engage one another to form an electrical connection that electrically couples a solar panel 30 to the spanner bar 114. The solar panel interface 440 may engage the solar panel frame 34 in such a way as to have electrical continuity with the solar panel frame 34. The electrical connection may pass from the solar panel interface 440 through (i) the stud 420, (ii) the nut 428 and the washer 426, (iii) the mounting plate 400, (iv) the washer 350, (v) the acorn nut 370, and (vi) the bolt 310 to the spanner bar 114. Two leveling feet 116 that engage the same spanner bar 114 may be electrically coupled to one another through the spanner bar 114. If multiple spanner bars 114 are coupled to one another, the spanner bars 114 may be electrically coupled through one or more splice plates 230 (e.g., through the clips 234).

### F Installation Method

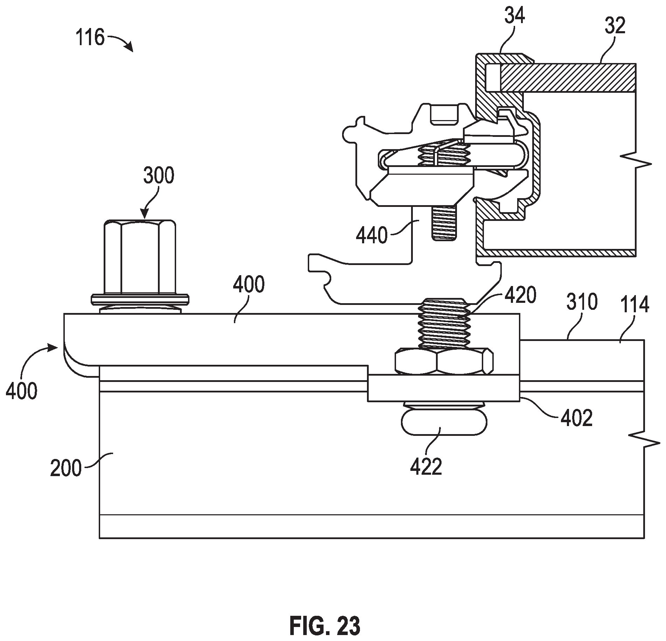

Referring to FIGS. 1-23, a method or process for installing the mounting system 100 is described. An installer may select a desired set of solar panels 30 for installation on the roof 20 and a set of desired installation positions. The solar panels 30 may be selected based on cost, power output capabilities, the capacity of the roof 20 to support the solar panels 30, and other factors. The installation positions may be selected based on sun exposure, aesthetics, and other factors. Based on the installation positions for the solar panels 30, the installer may determine the quantity and installation positions of the bases 110, the hooks 112, and the spanner bars 114 needed to support the solar panels 30. These installation positions may be selected based on proximity to the roof tiles 26, the rafters 22, and other parts of the roof 20.

Referring to FIGS. 1-4, the installer may remove roof tiles 26 near the installation positions of each of the bases 110, providing access to the decking 24. The installer may place a base 110 onto the decking 24 at each of the installation positions, ensuring that at least one set of the fastener apertures 134 is aligned with one of the rafters 22. The installer may run a pair of screws through the selected fastener apertures 134 and into the decking 24 and a rafter 22. These screws fixedly couple the base 110 to the roof 20 and compress the pad 140, forming a seal to prevent water ingress.

For each base 110, the installer may select one of the lateral slots 136 to couple a hook 112 to the base 110. The lateral slot 136 may be selected based on a lateral measurement of the installation position of the corresponding spanner bar 114. The installer may insert a carriage bolt 154 through the vertical slot 180 and the selected lateral slot 136, then thread an acorn nut 152 onto the carriage bolt 154. The installer may slide the carriage bolt 154 along the lateral slot 136 and the vertical slot 180 to position of the hook 112 as desired. The installer may then use a tool (e.g., an impact wrench) to tighten the acorn nut 152 and fix the position of the hook 112. In some embodiments, the acorn nut 152, the flashing bolt 194, both of the acorn nuts 370, and the stud 420 may all be adjusted (e.g., tightened) using a single common tool (e.g., a 0.5 inch socket wrench, a T40 Torx drive bit, etc.).

Referring to FIGS. 1, 4, and 7, after securing the hook 112, the installer may place a flashing panel 118 in the position where the corresponding roof tile 26 was removed. The flashing bolt 194 may be unscrewed to a first position (e.g., an unscrewed position) in which the flashing bolt 194 only extends partway across the gap 196 of the hook 112 and permits insertion of the flashing panel 118 into the gap 196. The flashing panel 118 may be inserted into the gap 196 of the hook 112 while the flashing bolt 194 is in the unscrewed position. Once the flashing panel 118 is positioned as desired, the flashing bolt 194 may be tightened to a second position (e.g., an installed position) in which the flashing bolt 194 is received within both the threaded passage 190 and the fastener slot 192. This forces the flashing bolt 194 to penetrate the flashing panel 118 and form the flashing aperture 198, fixing the flashing panel 118 in place.

Beneficially, by replacing the roof tiles 26 with flashing panels 118, the mounting system 100 eliminates the need for some of the roof tiles 26. Over time, roof tiles 26 may become damaged (e.g., due to weather, due to debris falling on the roof 20, due to people walking across the roof 20, etc.). Many different types of roof tiles 26 are produced, and it may be undesirable to replace a roof tile 26 with a different type of roof tile 26 due to the roof tiles 26 being visually distinct from one another (e.g., not matching one another). Finding additional matching roof tiles 26 to replace broken ones may be difficult, so it may be desirable to reserve the roof tiles 26 replaced with flashing panel 118 if any of the other roof tiles 26 become broken.

Referring to FIGS. 2-5, after installing the flashing panels 118, the installer may attach the spanner bars 114 to the hooks 112. The desired installation positions of the spanner bars 114 and the hooks 112 may be selected such that each spanner bar 114 is supported by two or more hooks 112. If the length of a single spanner bar 114 is not sufficient for a given installation, the installer may couple multiple spanner bars 114 in alignment with one another using one or more splice plates 230 (e.g., as shown in FIG. 10). A fastener assembly 300 may be preassembled with each hook 112 (e.g., as shown in FIG. 4). The installer may insert the bolt 310 of each the fastener assembly 300 into the side slot 206 of the spanner bar 114, then rotate the bolt 310 to the retention orientation using the wings 354 of the washer 350. The installer may then use a tool (e.g., an impact wrench) to tighten the acorn nuts 370 and fix the spanner bar 114 in place.

Referring to FIGS. 1, 3, and 21, after installing the spanner bars 114, the installer may install the leveling feet 116. The solar panel interfaces 440 of each leveling foot 116 may be engaged with the solar panel frame 34 of a given solar panel 30 prior to coupling the leveling feet 116 to the spanner bar 114. Alternatively, the solar panel interface 440 may be coupled to the solar panels 30 after coupling the leveling foot 116 to the spanner bar 114.

For each leveling foot 116, the installer may insert the bolt 310 of the leveling foot 116 into the top slot 204 of a corresponding spanner bar 114, then rotate the bolt 310 to the retention orientation using the wings 354 of the washer 350. The installer may slide the leveling foot 116 along the top slot 204 and rotate the leveling foot 116 until the solar panel interface 440 is in the desired lateral and longitudinal positions. The installer may use a tool (e.g., an impact wrench) to tighten the acorn nut 370 and fix the lateral and longitudinal position of the solar panel interface 440. The installer may use a tool (e.g., an impact wrench) to rotate the stud 420 relative to the solar panel interface 440 to adjust the vertical position of the solar panel interface 440. It may be difficult to visually determine the desired height for each solar panel interface 440 that corresponds to a level orientation of the solar panel 30 until the solar panels 30 are installed on the roof 20. Beneficially, the studs 420 may be rotated even after the solar panel interfaces 440 are coupled to the solar panels 30, permitting leveling adjustment of the solar panels 30 after the solar panels 30 are coupled to the roof 20. After this process is repeated for each leveling foot 116, the mounting system 100 may be fully installed.

### G. Alternative Components

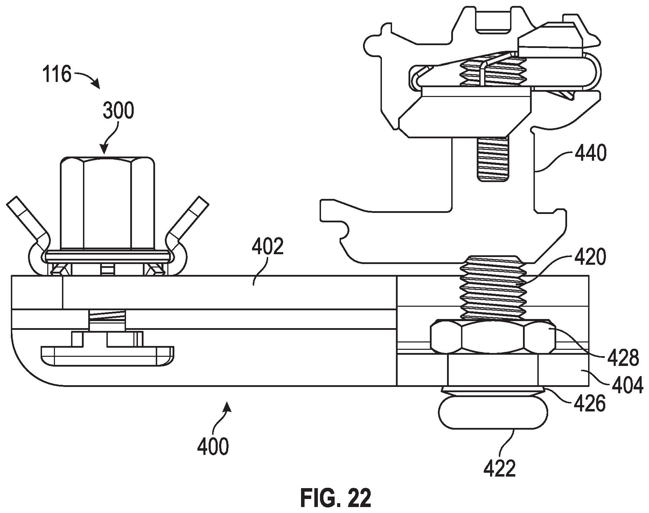

Referring to FIG. 22, an alternative embodiment of the leveling foot 116 is shown. The leveling foot 116 of FIG. 22 may be substantially similar to the leveling foot 116 of FIG. 20, except as otherwise described herein. The mounting system 100 may be usable with both the leveling foot 116 of FIG. 20 and the leveling foot 116 of FIG. 22. By way of example, the mounting system 100 may replace the leveling foot 116 of FIG. 20 with the leveling foot 116 of FIG. 22 based on the desired characteristics of the installation.

In the leveling foot 116 of FIG. 22, the solar panel flange 404 is offset below the spanner bar flange 402 instead of being offset above the spanner bar flange 402. Accordingly, this lowers the head 422 below the top surface of the spanner bar 114. This arrangement lowers the solar panel interface 440 relative to the body 200.

In some embodiments, the leveling foot 116 of FIG. 20 is used for a roof 20 having roof tiles 26 of a standard height (e.g., S-tiles). The leveling foot 116 of FIG. 22 may be used for a roof 20 having lower-profile or flatter roof tiles 26 (e.g., flat tiles). The lower height of the leveling foot 116 of FIG. 22 may be advantageous when less space is provided between the decking 24 and the roof tiles 26. However, dropping the head 422 below the top surface of the spanner bar 114 may limit rotation of the leveling foot 116 relative to the spanner bar 114.

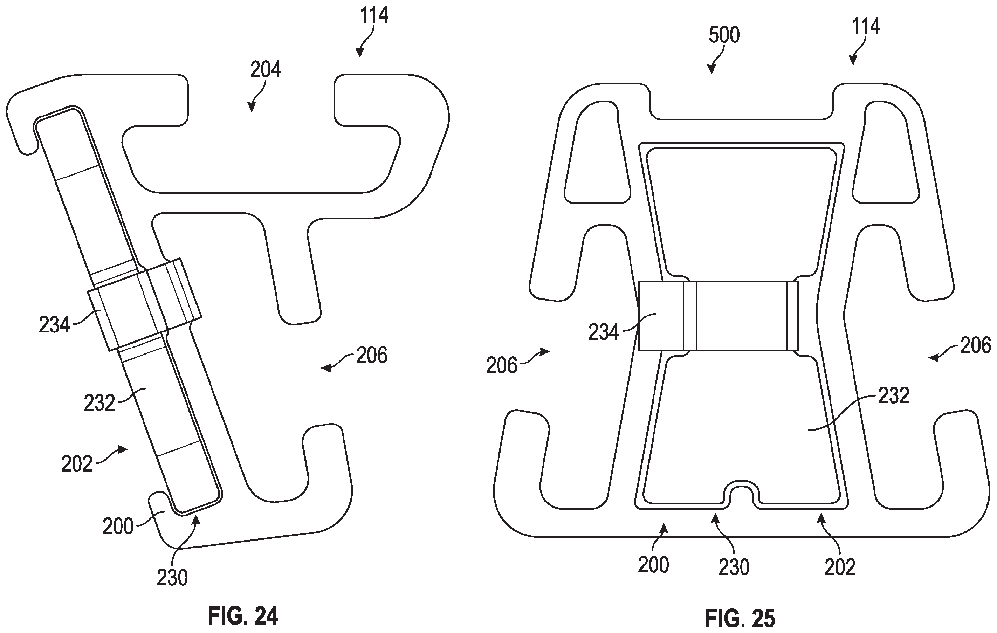

Referring to FIGS. 24-28, alternative embodiments of the spanner bar 114 and the splice plate 230 are shown. The spanner bars 114 and the splice plates 230 of FIGS. 24-28 may be substantially similar to the spanner bar 114 and the splice plate 230 of FIG. 9, except as otherwise described herein. In the spanner bar 114 of FIG. 24, the central passage 202 is open on one side, configuring the central passage 202 as a slot.

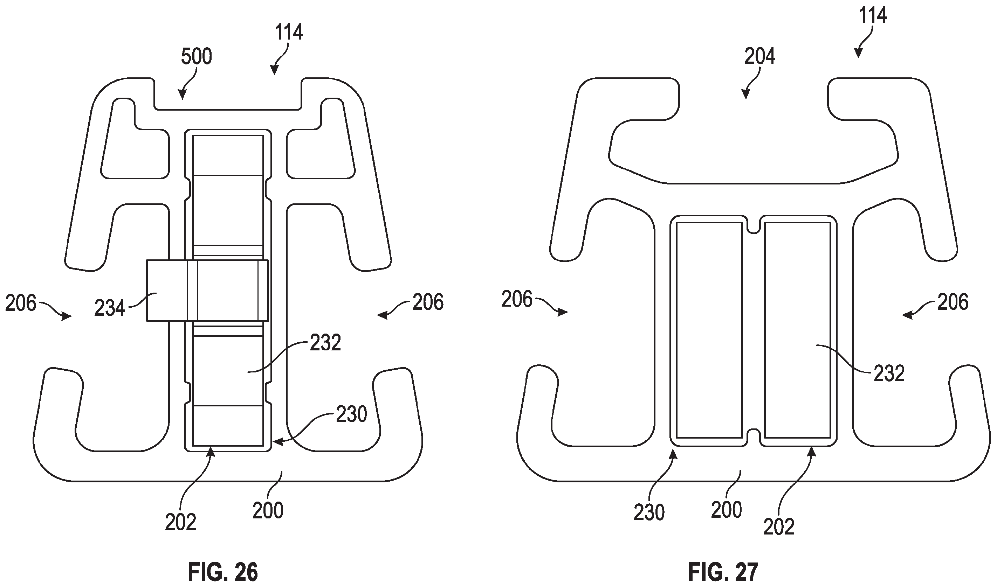

In the embodiments of FIGS. 25, 26, and 27, the spanner bar 114 defines two side slots 206. One of the side slots 206 receives a fastener assembly 300 to couple the spanner bar 114 to a hook 112, and the other of the side slot 206 receives a fastener assembly 300 to couple the spanner bar 114 to a leveling foot 116. In the embodiments of FIGS. 25 and 26, the top slot 204 is omitted and replaced with a slot or groove, shown as groove 500, that provides clearance for the head 422. In the embodiment of FIG. 27, the spanner bar 114 includes the top slot 204 and two of the side slots 206, accommodating for coupling the leveling foot 116 to the top slot 204 or the side slot 206, as desired.

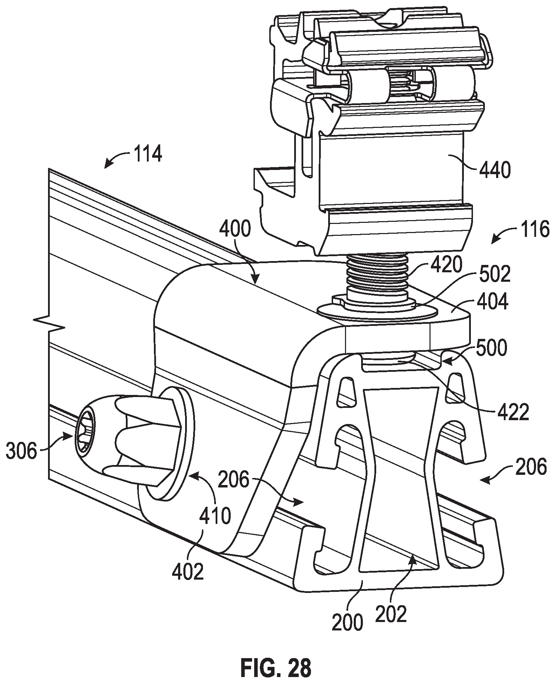

FIG. 28 illustrates an embodiment of the leveling foot 116 that has been modified to accommodate the connection to a side slot 206. The leveling foot 116 of FIG. 28 is shown coupled to the spanner bar 114 of FIG. 25. However, the leveling foot 116 of FIG. 28 may also be usable with the spanner bar 114 of FIGS. 26 and 27. In this embodiment, the spanner bar flange 402 extends along a laterally-facing side of the spanner bar 114. Accordingly, the fastener aperture 410 for the fastener assembly 300 aligns with the side slot 206. Additionally, the head 422 of the stud 420 is received within the groove 500. The nut 428 is replaced with a fastener or circlip (e.g., a snap ring, an E-clip, etc.), shown as circlip 502. The stud 420 defines an annular groove that receives the circlip 502, coupling the circlip 502 to the stud 420. The mounting plate 400 is received between the head 422 and the circlip 502, limiting translational movement of the stud 420 but permitting rotation of the stud 420 to facilitate leveling adjustment of the solar panel interface 440.

As utilized herein with respect to numerical ranges, the terms "approximately," "about," "substantially," and similar terms generally mean +/- 10% of the disclosed values. When the terms "approximately," "about," "substantially," and similar terms are applied to a structural feature (e.g., to describe its shape, size, orientation, direction, etc.), these terms are meant to cover minor variations in structure that may result from, for example, the manufacturing or assembly process and are intended to have a broad meaning in harmony with the common and accepted usage by those of ordinary skill in the art to which the subject matter of this disclosure pertains. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using a separate intervening member and any additional intermediate members coupled with one another, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic.

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the building 10 as shown in the various exemplary embodiments is illustrative only. Additionally, any element disclosed in one embodiment may be incorporated or utilized with any other embodiment disclosed herein. For example, the leveling foot 116 of the exemplary embodiment shown in at least FIG. 22 may be incorporated in the mounting system 100 of the exemplary embodiment shown in at least FIG. 3. Although only one example of an element from one embodiment that can be incorporated or utilized in another embodiment has been described above, it should be appreciated that other elements of the various embodiments may be incorporated or utilized with any of the other embodiments disclosed herein.

## Claims

1. A mounting system for a solar panel, the mounting system comprising:
a base configured to be coupled to a support structure;
a solar panel interface configured to be coupled to the solar panel;
a bracket including a first portion coupled to the base and a second portion coupled to the solar panel interface, wherein a gap is defined between the first portion and the second portion of the bracket; and
a fastener configured to extend at least partially across the gap to facilitate at least partially securing a roofing component within the gap.

2. The mounting system of claim 1, wherein the bracket includes a threaded section coupled to the second portion of the bracket, and wherein the fastener is in configured to engage the threaded section and extend toward the first portion of the bracket.

3. The mounting system of claim 2, wherein the first portion of the bracket defines a receiving aperture, and wherein the fastener is repositionable between (a) a first position in which the fastener engages the threaded section and extends partway across the gap and (b) a second position in which the fastener engages the threaded section and extends into the receiving aperture.

4. The mounting system of claim 3, wherein the fastener is configured to extend through a component aperture of the roofing component to couple the roofing component to the bracket at least when the fastener is in the second position.

5. The mounting system of one of the preceding claims, wherein the fastener is a first fastener, the mounting system further comprising:
a spanner bar positioned between the solar panel interface and the second portion of the bracket, the spanner bar defining a first slot and a second slot each extending at least partially along a length of the spanner bar;
a second fastener extending within the first slot and engaging the spanner bar to couple the solar panel interface to the spanner bar; and
a third fastener extending within the second slot and engaging the spanner bar to couple the second portion of the bracket to the spanner bar, and/or wherein the base includes:
a first flange configured to be coupled to the support structure;
a second flange extending upward from the first flange and defining a first lateral slot and a second lateral slot, wherein the first lateral slot and the second lateral slot extend laterally, and wherein the first lateral slot is laterally offset from the second lateral slot; and
a fourth fastener extending through the first lateral slot to couple the first portion of the bracket to the second flange of the base.

6. A mounting system for a solar panel, the mounting system comprising:
a base configured to be coupled to a support structure;
a solar panel interface configured to be coupled to the solar panel;
a bracket having a first end portion coupled to the base and a second end portion positioned above the first end portion;
a spanner bar defining a slot extending at least partially along a length of the spanner bar; and
a fastener extending within the slot and engaging the spanner bar to couple the solar panel interface or the second end portion of the bracket to the spanner bar.

7. The mounting system of claim 6, wherein the fastener is a T-bolt including a threaded portion and a pair of wings extending outward from the threaded portion, and wherein the wings engage the spanner bar to couple the solar panel interface or the second end portion of the bracket to the spanner bar.

8. The mounting system of claim 7, further comprising a washer defining a washer aperture that receives the threaded portion of the T-bolt, wherein the washer has an alignment surface that is configured to engage the T-bolt to limit rotation of the washer relative to the T-bolt, and wherein the washer includes a visual indicator indicating an orientation of the T-bolt.

9. The mounting system of claim 7 or 8, wherein the T-bolt has a flat surface extending along the threaded portion of the T-bolt, and wherein the alignment surface is configured to engage the flat surface to limit rotation of the washer relative to the T-bolt, and/or wherein the visual indicator is a lever arm, and wherein the washer is configured to permit a user to rotate the T-bolt within the slot of the spanner bar by pressing against the lever arm.

10. The mounting system of one of claims 7 to 9, wherein the spanner bar includes a pair of flanges at least partially defining the slot, and wherein the wings of the T-bolt are configured to engage the flanges of the spanner bar to resist removal of the T-bolt from the slot.

11. The mounting system of one of claims 6 to 10, wherein the slot is a first slot, wherein the spanner bar defines a second slot extending at least partially along the length of the spanner bar, and wherein the fastener is a first fastener extending within the first slot and engaging the spanner bar to couple the second end portion of the bracket to the spanner bar, further comprising a second fastener extending within the second slot and engaging the spanner bar to couple the solar panel interface to the spanner bar, preferably wherein the first slot is positioned along a lateral side of the spanner bar, and wherein the second slot is positioned along a top side of the spanner bar.

12. The mounting system of one of claims 6 to 11, wherein the spanner bar is a first spanner bar and the slot is a first slot, and wherein the first spanner bar defines a first coupling passage extending at least partially along the length of the first spanner bar, further comprising:
a second spanner bar defining a second coupling passage and a second slot extending at least partially along a length of the second spanner bar; and
a connector configured to extend within the first coupling passage and the second coupling passage to couple the first spanner bar to the second spanner bar such that the first slot aligns with the second slot.

13. The mounting system of claim 12, wherein the connector includes a protrusion that is configured to engage the first spanner bar to limit insertion of the connector into the first coupling passage, preferably wherein the protrusion is configured to engage the second spanner bar to limit insertion of the connector into the second coupling passage.

14. A mounting system for a solar panel, the mounting system comprising:
a base including:
a first flange configured to be coupled to a support structure; and
a second flange extending upward from the first flange and defining a first lateral slot and a second lateral slot, wherein the first lateral slot and the second lateral slot extend laterally, and wherein the first lateral slot is laterally offset from the second lateral slot;
a bracket configured to be coupled to a solar panel; and
a fastener extending through the first lateral slot to couple the bracket to the second flange of the base.

15. The mounting system of claim 14, wherein the fastener is a first fastener, wherein the bracket defines a vertical slot extending vertically, wherein the first fastener extends through the first lateral slot and the vertical slot to couple the bracket to the second flange of the base, wherein the first flange defines a first fastener aperture and a second fastener aperture each configured to receive a second fastener to couple the base to the support structure, and wherein the first fastener aperture is laterally offset from the second fastener aperture, and/or further comprising a pad extending along a bottom side of the first flange and fixedly coupled to the base, wherein the pad includes an ethylene propylene diene terpolymer (EPDM) foam.
